# EUROPEAN PATENT SPECIFICATION

(11) **EP 2 946 748 B1**
(45) Date of publication and mention of the grant of the patent: **13.09.2017**
(21) Application number: 15168120.2
(22) Date of filing: 19.05.2015
(51) Int. Cl.: A61C 17/02, A61C 17/028

(54) **ORAL CLEANSING DEVICE**
MUNDREINIGUNGSVORRICHTUNG
DISPOSITIF D'HYGIÈNE BUCCALE

(30) Priority: 19.05.2014 JP 2014103786; 19.05.2014 JP 2014103787
(43) Date of publication of application: 25.11.2015
(73) Proprietor: Panasonic Intellectual Property Management Co., Ltd., Osaka-shi, Osaka 540-6207 (JP)
(72) Inventor: Taniguchi, Shinichi, Osaka-shi, Osaka 540-6207 (JP); Kitagawa, Tadanobu, Osaka-shi, Osaka 540-6207 (JP)
(74) Representative: Grünecker Patent- und Rechtsanwälte PartG mbB

(56) References cited:
- DE-A1- 3 501 044
- US-A- 3 828 771
- US-A- 4 201 200
- US-B1- 6 299 443

## Description

### BACKGROUND OF THE INVENTION

### 1. Field of the Invention

The present disclosure relates to oral cleansing devices.

### 2. Description of the Related Art

Oral cleansing devices are available in the market, and they are used for removing a stain that is hard to remove with a toothbrush, or for providing gums with a rubdown. One of these oral cleansing devices includes a tank for storing a cleaning fluid, an exhaust port for discharging the cleaning fluid, a cleansing unit to be operated by a user, and a pump for discharging the cleaning fluid stored in the tank into the cleansing unit. This oral cleansing device further includes a cleansing duct for communicating between the tank and the exhaust port, and a pipe for supplying the cleaning fluid discharged from the pump to the cleansing unit. Such an oral cleansing devices is also know from US 4 201 200 A and US 6 299 443 B1 which correspond to the preamble of claim 1.

In the foregoing oral cleansing device, drive of the pump allows supplying the cleaning fluid stored in the tank to the cleansing unit via the cleansing duct, and then the cleaning fluid spouts from the exhaust port of the cleansing unit before arriving at the gums.

A conventional but improved oral cleansing device has a function of mixing the cleaning fluid running through the cleansing duct with air, thereby discharging the cleaning fluid containing air bubbles from the cleansing unit. This function aims to this: the supply of the cleaning fluid containing air bubbles to the gums provides a user with better feeling than a case where the cleaning fluid with substantially no air bubbles is supplied, or provides the user with a feeling that the gums are massaged with greater force. Japanese Patented Publication No. 2002 - 503137 discloses one of the oral cleansing devices having the foregoing function.

### SUMMARY OF THE INVENTION

The oral cleansing device disclosed in the Japanese Patented Publication No. 2002 - 503137 has the following mechanism: Air sucked into the cleansing duct at upstream side from the pump is compressed by the pump, and the compressed air is discharged together with the cleaning fluid to downstream side from the pump, so that the cleaning fluid flowing through the cleansing unit contains air bubbles smaller in size. Although the cleaning fluid containing air bubbles is discharged from the exhaust port of the cleansing unit, the smaller air bubbles may cause the cleaning fluid not to provide the gums with a good stimulus.

The present disclosure aims to provide an oral cleansing device that can supply the gums with a good stimulus.

An oral cleansing device in accordance with an embodiment of the present disclosure includes a tank for storing a cleaning fluid, a cleansing unit having an exhaust port from which the cleaning fluid is discharged, a cleansing duct communicating between the tank and the exhaust port, a pump for sucking the cleaning fluid stored in the tank with a negative pressure before discharging the sucked cleaning fluid to the exhaust port, and a suction duct for supplying air to the cleansing duct.

The suction duct is connected to a downstream cleansing duct disposed at the downstream side from the pump, so that the air can be sucked into the cleansing duct with the negative pressure produced by the pump. The downstream cleansing duct is a part of the cleansing duct and is placed at the downstream side from the pump. The oral cleansing device in accordance with the embodiment allows providing the gums with a good stimulus.

### BRIEF DESCRIPTION OF DRAWINGS

FIG. 1 schematically illustrates an oral cleansing device in accordance with a first embodiment.
FIG. 2 schematically illustrates an inner structure of the oral cleansing device shown in FIG. 1
FIG. 3A shows an action of sucking air into the oral cleansing device shown in FIG. 1.
FIG. 3B shows an action of discharging the air from the oral cleansing device shown in FIG. 1.
FIG. 4 schematically illustrates a pump in accordance with a second embodiment.
FIG. 5A shows an action of sucking a cleaning fluid by the pump shown in FIG. 4.
FIG. 5B shows an action of discharging the cleaning fluid by the pump shown in FIG. 4.
FIG. 6 schematically illustrates a pump in accordance with a third embodiment.
FIG. 7A shows an action of sucking a cleaning fluid by the pump shown in FIG. 6.
FIG. 7B shows an action of discharging the cleaning fluid by the pump shown in FIG. 6.
FIG. 8A schematically illustrates a state where a switch used in a fourth embodiment is set to a water-stop position.
FIG. 8B schematically illustrates a state where the switch shown in FIG. 8A is set to a first water-supply position.
FIG. 8C schematically illustrates a state where the switch shown in FIG. 8A is set to a second water-supply position.
FIG. 9 is a perspective view of an oral cleansing device in accordance with a fifth embodiment.
FIG. 10 is an exploded perspective view of the oral cleansing device shown in FIG. 9.
FIG. 11 is a rear view of a first housing element shown in FIG. 10.
FIG. 12 is a rear view of a second housing element shown in FIG. 10.
FIG. 13A is a front view of a channel forming element shown in FIG. 10.
FIG. 13B is a lateral view of the channel forming element shown in FIG. 10.
FIG. 13C is a sectional view the channel forming element shown in FIG. 13A cut along line 13C - 13C.
FIG. 14A is a front view of a base plate shown in FIG. 10.
FIG. 14B is a rear view of the base plate shown in FIG. 10.
FIG. 14C is a lateral view of the base plate shown in FIG. 10.
FIG. 15A is a plan view of a check valve for a suction duct shown in FIG. 10.
FIG. 15B is a front view of the check valve shown in FIG. 10.
FIG. 15C is a sectional view of the check valve shown in FIG. 15A cut along line 15C - 15C.
FIG. 16A is a front view of a lever and a lid shown in FIG. 10.
FIG. 16B is a rear view of the lever and the lid shown in FIG. 10.
FIG. 16C is a sectional view of the lever and the lid shown in FIG. 16 cut along line 16C - 16C.
FIG. 17A is a front view of a cover shown in FIG. 10.
FIG. 17B is a rear view of the cover shown in FIG. 10.
FIG. 17C is a lateral view of the cover shown in FIG. 10.
FIG. 18A is a front view of a switch shown in FIG. 10.
FIG. 18B is a lateral view of the switch shown in FIG. 10.
FIG. 18C is a sectional view of the switch shown in FIG. 18A cut along line 18C - 18C.
FIG. 19 is a sectional view of the oral cleansing device shown in FIG. 9.
FIG. 20A is a sectional view illustrating a state where the switch shown in FIG. 19 is set to a water-stop position.
FIG. 20B is a sectional view illustrating a state where the switch shown in FIG. 19 is set to a first water-supply position.
FIG. 20C is a sectional view illustrating a state where the switch shown in FIG. 19 is set to a second water-supply position.

### DETAILED DESCRIPTION OF THE PREFERRED EMBODIMENTS

### Examples of embodiments of oral cleansing devices

1. An oral cleansing device in accordance with an embodiment comprises the following structural elements:
   a tank for storing a cleaning fluid;
   a cleansing unit including an exhaust port for discharging the cleaning fluid;
   a cleansing duct for communicating between the tank and the exhaust port;
   a pump for sucking the cleaning fluid with a negative pressure, and discharging the sucked cleaning fluid to the exhaust port; and
   a suction duct for supplying air to the cleansing duct.

   The suction duct is connected to a downstream cleansing duct disposed on a downstream side from the pump such that the air can be sucked into the cleansing duct with the negative pressure produced by the pump. The downstream cleansing duct is a part of the cleansing duct and is placed on the downstream side from the pump.
   In this oral cleansing device, a sucking action of the pump sucks the cleaning fluid stored in the tank, and the negative pressure produced by the pump acts on the downstream cleansing duct and the suction duct. When the suction duct is opened with a switch, the air in the suction duct is sucked into the downstream cleansing duct, so that air outside the oral cleansing device is sucked into the suction duct.
   A discharging action of the pump discharges the cleaning fluid from the pump to the downstream cleansing duct, and the cleaning fluid is mixed with the air sucked by the sucking action of the pump, whereby the cleaning fluid containing air bubbles is discharged from the exhaust port of the cleansing unit.
   As discussed above, the air is sucked into the downstream cleansing duct, so that the cleaning fluid flowing through the downstream cleansing duct tends to contain air bubbles greater in size than a cleaning fluid of a conventional oral cleansing device. As a result, the cleaning fluid containing rather greater air bubbles is discharged from the exhaust port, thereby allowing the cleaning fluid to give a better stimulus to the gums.
2. Another oral cleansing device in accordance with another embodiment further comprises a check valve for the suction duct. This check valve closes the suction duct when the cleaning fluid discharged from the pump flows through the downstream cleansing duct. The check valve for the suction duct can exhibit, for instance, a first pattern in which the check valve opens the suction duct with the negative pressure produced by the pump, or a second pattern in which the check valve closes the suction duct with a pressure of the cleaning fluid discharged from the pump.
   The oral cleansing device equipped with a check valve following the first pattern allows the check valve to close the suction duct when a negative pressure acting on the check valve is smaller than a first given negative pressure or no negative pressure acts on the check valve. This mechanism allows the check valve for the suction duct to prevent the cleaning fluid discharged from the pump to the downstream cleansing duct from being discharged outside the device through the suction duct. As a result, an amount of the cleaning fluid discharged from the exhaust port of the cleansing unit can be prevented from decreasing.
   The sucking action done by the pump generates a negative pressure, which acts on the downstream cleansing duct and the check valve for the suction duct. When the negative pressure acting on the check valve is equal to or greater than the first given negative pressure, the check valve opens the suction duct, whereby the air is sucked from the suction duct into the downstream cleansing duct.
   This mechanism allows the cleaning fluid discharged by the discharging action of the pump into the downstream cleansing duct to be mixed with the air sucked by the sucking action of the pump into the downstream cleansing duct, whereby the cleaning fluid containing air bubbles is discharged from the exhaust port of the cleansing unit.
   The discharging action of the pump discharges the cleaning fluid into the downstream cleansing duct, and at this time, a pressure of the cleaning fluid acts on the check valve. In this case, the oral cleansing device equipped with a check valve following the second pattern allows the check valve to close the suction duct when the pressure of the cleaning fluid acting on the check valve is equal to or greater than the first given pressure.
   This mechanism allows the check valve for the suction duct to prevent the cleaning fluid discharged from the pump to the downstream cleansing duct from discharging outside the device through the suction duct.
   When a pressure acting on the check valve is smaller than a first given pressure or no pressure pf the cleansing fluid acts on the check valve, the check valve opens the suction duct. This mechanism allows the negative pressure produced by the sucking action of the pump to act on both the downstream cleansing duct and the suction duct, so that the air is sucked from the suction duct into the downstream cleansing duct. As a result, the cleaning fluid discharged by the discharging action of the pump into the downstream cleansing duct is mixed with the air sucked by the sucking action of the pump into the downstream cleansing duct, whereby the cleaning fluid containing air bubbles is discharged from the exhaust port of the cleansing unit.
3. Another oral cleansing device in accordance with still another embodiment further comprises a check valve for the cleansing duct, and this check valve is disposed on a downstream side from a duct connecting section to which the suction duct is connected in the downstream cleansing duct, and this check valve closes the downstream cleansing duct when the pump generates a negative pressure.
   This check valve for the cleansing duct can exhibit, for instance, a first pattern in which a pressure of the cleaning fluid flowing upstream from the duct connecting section causes to open the downstream cleansing duct, or a second pattern in which a negative pressure produced by the pump causes to close the downstream cleansing duct.
   The oral cleansing device equipped with the check valve, which follows the first pattern, in the cleansing duct allows a pressure of the cleaning fluid to act on this check valve when the cleaning fluid is discharged by the discharging action of the pump into the downstream cleansing duct. When this pressure is equal to or greater than a second given pressure, this check valve opens the downstream cleansing duct, whereby the cleaning fluid containing air bubbles or the cleaning fluid containing substantially no air bubbles is discharged from the exhaust port of the cleansing unit.
   When the cleaning fluid's pressure acting on the check valve in the cleansing duct is lower than the second given pressure, or when the pressure does not act on the check valve, this check valve closes the downstream cleansing duct. When a negative pressure is produced by the sucking action of the pump, the mechanism discussed above prevents the negative pressure from acting on a downstream side from the check valve in the downstream cleansing duct, so that the cleaning fluid or air available in the downstream side from the check valve in the downstream cleansing duct does not actually flow backward. Comparing with a case where no check valve is available in the cleansing duct, this structure produces a greater negative pressure acting on the suction duct and a greater amount of air sucked from the suction duct into the downstream cleansing duct.
   The oral cleansing device equipped with the check valve, which follows the second pattern, in the cleansing duct allows the check valve to open the downstream cleansing duct when the negative pressure acting on this check valve is lower than the second given negative pressure or when the negative pressure does not act on the check valve, whereby the cleaning fluid containing air bubbles or the cleaning fluid containing substantially no air bubbles is discharged from the exhaust port of the cleansing unit.
   The sucking action done by the pump generates a negative pressure, which acts on the downstream cleansing duct and the check valve in the cleansing duct.
   When the negative pressure acting on the check valve is equal to or greater than the second given negative pressure, the check valve closes the downstream cleansing duct. This mechanism prevents the negative pressure from acting on a downstream side from the check valve in the downstream cleansing duct, so that the cleaning fluid or air available in the downstream side from the check valve in the downstream cleansing duct does not actually flow backward. Comparing with a case where no check valve is available in the cleansing duct, this structure produces a greater negative pressure acting on the suction duct and a greater amount of air sucked from the suction duct into the downstream cleansing duct.
4. Another oral cleansing device in accordance with yet still another embodiment does not have a check valve at the exhaust port of the pump. This structure allows a greater negative pressure to act on the downstream cleansing duct and the suction duct when the pump performs a sucking action, whereby a greater amount of air is sucked from the suction duct into the downstream cleansing duct comparing with a structure where a check valve is available at the exhaust port of the pump. The cleaning fluid thus contains a greater amount of air bubbles, so that this cleaning fluid provides the gums with a better stimulus and also removes stains more effectively from the teeth.
5. Another oral cleansing device in accordance with another embodiment includes a suction duct formed in the cleansing unit, and this suction duct is connected to the downstream cleansing duct in the cleansing unit.
   In this oral cleansing device, the structure discussed above allows shortening a length of the suction duct comparing with a case where a suction duct having a function similar to that of the suction duct is formed in the main body of the device, and this suction duct is connected to the downstream cleansing duct in the cleansing unit. As a result, a structure related to the suction duct can be simplified.
6. Another oral cleansing device in accordance with still another embodiment further comprises a switch mounted to the cleansing unit for opening or closing the suction duct. In this oral cleansing device, the pump is driven to supply a tube with the cleaning fluid stored in the tank, and then supply the cleaning fluid to the cleansing unit before the cleaning fluid is discharged from the exhaust port of the cleansing unit.

When the suction duct is opened with the switch, the air supplied from the suction duct to the downstream cleansing duct is mixed with the cleaning fluid discharged by the discharging action of the pump into the downstream cleansing duct, whereby the cleaning fluid containing air bubbles is discharged from the exhaust port of the cleansing unit.

When the suction duct is closed with the switch, the air is not actually sucked from the suction duct to the downstream cleansing duct, and the air is thus discharged from the exhaust port of the cleansing unit.

Operating the switch allows a user to select a jet pattern from two patterns, namely, a first jet pattern discharges the cleaning fluid containing air bubbles from the exhaust port of the cleansing unit, and a second jet pattern discharges the cleaning fluid containing actually no air bubbles from the exhaust port of the cleansing unit.

Since the switch capable of selecting the jet pattern is formed in the cleansing unit, a user can operate the switch with his or her hand holding the cleansing unit. As a result, this oral cleansing device provides the user with convenient operability.

### FIRST EXEMPLARY EMBODIMENT

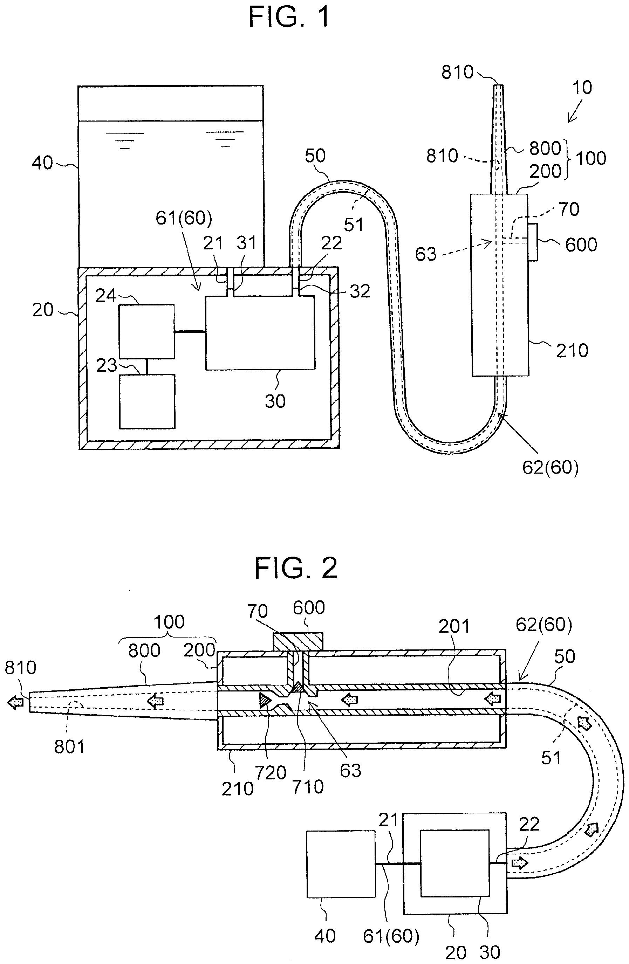

FIG. 1 shows an aspect of oral cleansing device 10, which comprises the following structural elements:
tank 40 for storing a cleaning fluid;
main body 20 to which tank 40 is mounted;
cleansing unit 100 having exhaust port 810 from which the cleaning fluid is discharged;
tube 50 connecting main body 20 to cleansing unit 100;
cleansing duct 60 for communicating between tank 40 and exhaust port 810; and
suction duct 70 for supplying air to cleansing duct 60.

Main body 20 includes pump 30 that discharges the cleaning fluid stored in tank 40 into tube 50, motor 24 for driving pump 30, and power supply 23 for supplying motor 24 with electric power. Main body 20 accommodates power supply 23 and motor 24 therein, and further includes upstream duct 21 that communicates between tank 40 and suction port 31 of pump 30, and downstream duct 22 that communicates between exhaust port 32 and tube 50.

Tube 50 is formed of, for instance, a highly flexible material, and includes inner duct 51 that communicates between downstream duct 22 and cleansing unit 100. Since tube 50 deforms flexibly, a user can change a posture of cleansing unit 100 in any direction when the user cleans the oral with cleansing unit 100.

Cleansing unit 100 includes grip 200 forming a chief body of unit 100, nozzle 800 for discharging the cleaning fluid supplied from grip 200, and switch 600 for opening or closing suction duct 70.

Grip 200 includes housing 210 which accommodates various elements, inner duct 201 for communicating between inner duct 51 of tube 50 and nozzle 800, and suction duct 70. Inner duct 201 and suction duct 70 are formed inside housing 210. Nozzle 800 communicates with inner duct 201 of grip 200, and is formed of inner duct 801 including exhaust port 810 of cleansing unit 100.

Cleansing duct 60 is formed of upstream duct 21 of main body 20, a duct inside pump 30, downstream duct 22 of main body 20, inner duct 51 of tube 50, inner duct 201 of grip 200, and inner duct 801 of nozzle 800.

Cleansing duct 60 is divided into two sections, namely, upstream cleansing duct 61 located on the upstream side from suction port 31 of pump 30, and downstream cleansing duct 62 located on the downstream side from exhaust port 32 of pump 30.

FIG. 2 shows an interior structure of cleansing unit 100. Suction duct 70 communicates between the outside of grip 200 and inner duct 201 of grip 200, and opens to, for instance, a face of housing 210. Switch 600 is mounted to housing 210 such that it can move with respect to housing 210, and can be set to a position which causes suction duct 70 to open or to close.

Grip 200 is formed of check valve 710 for suction duct 70, and check valve 720 for the cleansing duct that is a part of downstream cleansing duct 62 and is located on a downstream side from duct connecting section 63 to which suction duct 70 is connected.

Check valve 710 closes suction duct 70 when the cleaning fluid discharged from pump 30 flows in downstream cleansing duct 62, and for instance, it can take the following two patterns. Cleansing unit 100 includes, for instance, check valve 710 that takes the first pattern.

Check valve 710 for suction duct 70 takes the first pattern, and it opens suction duct 70 when a negative pressure produced by the sucking action of pump 30 is equal to or greater than a first given negative pressure. Check valve 710 closes suction duct 70 when the negative pressure produced by the sucking action of pump 30 is smaller than the first given negative pressure, or the negative pressure does not act.

Check valve 710 for suction duct 70 takes the second pattern, and it closes suction duct 70 when a pressure caused by the cleaning fluid discharged from pump 30 into downstream cleansing duct 62 is equal to or greater than a first given pressure. This check valve 710 opens suction duct 70 when the pressure caused by the cleaning fluid discharged from pump 30 into downstream cleansing duct 62 is smaller than the first given pressure, or the pressure caused by the cleaning fluid does not act.

Check valve 720 for downstream cleansing duct 62 closes duct 62 when pump 30 produces a negative pressure. Check valve 720 can take, for instance, the following two patterns. Cleansing unit 100 includes, for instance, check valve 720 taking the first pattern.

Check valve 720 for cleansing duct 62 takes the first pattern, and it opens downstream cleansing duct 62 when a pressure applied by the cleaning fluid discharged from pump 30 into downstream cleansing duct 62 is equal to or greater than a second given pressure. Check valve 720 closes downstream cleansing duct 62 when the pressure applied by the cleaning fluid discharged from pump 30 into downstream cleansing duct 62 is smaller than the second given pressure, or the pressure of the cleaning fluid does not act.

Check valve 720 for cleansing duct 62 takes the second pattern, and it closes downstream cleansing duct 62 when a negative pressure produced by the sucking action of pump 30 is equal to or greater than a second given negative pressure. Check valve 720 opens downstream cleansing duct 62 when the negative pressure produced by the sucking action of pump 30 is smaller than the second given negative pressure, or the negative pressure does not act.

A location of check valve 720 can be set at any place in downstream cleansing duct 62, for instance, check valve 720 is placed near duct connecting section 63 in duct 62. The place closer to duct connecting section 63 will decrease an amount of the cleaning fluid or the air flowing backward from exhaust port 810 of nozzle 800.

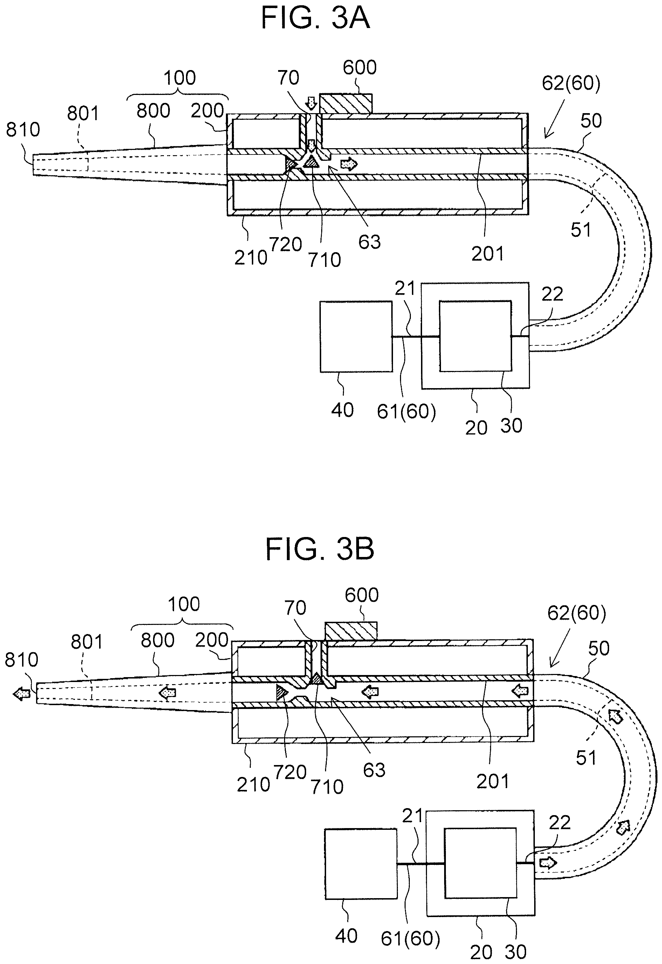

FIG. 3A shows an action of oral cleansing device 10 when switch 600 opens suction duct 70 and pump 30 sucks air. The sucking action of pump 30 allows the cleaning fluid in tank 40 to be sucked into pump 30, and the negative pressure produced by pump 30 acts on downstream cleansing duct 62 as well as on check valve 710 for suction duct 70.

This mechanism allows check valve 710 to open suction duct 70, so that the air in suction duct 70 is sucked into downstream cleansing duct 62 and the ambient air of cleansing unit 100 is sucked into suction duct 70 as indicated with the dotted arrows.

During the sucking action of pump 30, the pressure caused by the cleaning fluid, which is supposed to act on check valve 720 to open, does not act on check valve 720 for cleansing duct 62, so that check valve 720 closes downstream cleansing duct 62.

This mechanism allows check valve 720 to prevent the cleaning fluid or the air available in downstream cleansing duct 62 on a downstream side from check valve 720 from flowing backward. This structure allows a greater negative pressure to act on suction duct 70 than a case where no check valve 720 is available. As a result, a greater amount of air is sucked from suction duct 70 into downstream cleansing duct 62.

FIG. 3B shows an action of oral cleansing device 10 when pump 30 carries out the discharging act in the case where switch 600 opens suction duct 70. The cleaning fluid discharged by the discharging action of pump 30 flows through downstream cleansing duct 62, namely, through inner duct 51 in tube 50 and inner duct 201 in grip 200 in this order as shown with the dotted arrows in FIG. 3B. The cleaning fluid is then mixed with the air sucked by the sucking action of pump 30.

A pressure of the cleaning fluid flowing through inner duct 201, which is a part of downstream cleansing duct 62, acts on check valve 710 for suction duct 70 and check valve 720 for cleansing duct 62, so that check valve 720 opens downstream cleansing duct 62. As the dotted arrows indicate, the cleaning fluid flows from inner duct 201 in grip 200 to inner duct 801in nozzle 800, and then the cleaning fluid containing air bubbles is discharged from exhaust port 810 of nozzle 800.

During the discharging action of pump 30, the negative pressure supposed to act on check valve 710 to open suction duct 70 does not act on check valve 710, so that check valve 710 closes suction duct 70. This mechanism allows check valve 710 to prevent the cleaning fluid that flows through downstream cleansing duct 62 from being discharged from suction duct 70 to the outside of cleansing unit 100.

When the cleaning fluid discharged from exhaust port 810 is supplied to the gums, the cleaning fluid sometimes gives desirable stimuli to the gums. The user can get a pleasant feeling that cannot be obtained from the cleaning fluid containing substantially no air bubbles, or feel that the gums are rubbed down with greater force, or the user can get both of these feelings.

When the cleaning fluid discharged from exhaust port 810 is supplied to the teeth, stains that are hard to be removed by a toothbrush can be removed by the cleaning fluid containing the air bubbles. In oral cleansing device 10, when switch 600 closes suction duct 70 as shown in FIG. 2, although pump 30 carries out the sucking action, the air cannot be sucked from suction duct 70 into downstream cleansing duct 62.

The cleaning fluid discharged by the discharging action of pump 30 flows in downstream cleansing duct 62, to be more specific, flows from inner duct 51 in tube 50, through inner duct 201 in grip 200, and to inner duct 801 in nozzle 800 in this order. The cleaning fluid is not mixed with the air in duct 62, and discharged from exhaust port 810 of nozzle 800.

Foregoing oral cleansing device 10 produces the following advantages:
(1) Using the negative pressure produced by pump 30, oral cleansing device 10 sucks air from suction duct 70 into downstream cleansing duct 62. This structure allows the air to be sucked into downstream cleansing duct 62 located on the downstream side from pump 30, so that the cleaning fluid flowing through duct 62 tends to contain air bubbles greater in size than a case where the air is supplied to upstream cleansing duct 61. As a result, the cleaning fluid containing air bubbles rather greater in size is discharged from exhaust port 810 of nozzle 800, thereby providing the gums with pleasant stimuli.
(2) According to the structure described in item (1), using the negative pressure produced by pump 30, oral cleansing device 10 sucks the air from suction duct 70 into downstream cleansing duct 62. This structure allows device 10 to be downsized comparing with a case where a pump for supplying air to cleansing duct 60 is provided in cleansing duct 60 in addition to pump 30 that discharges the cleaning fluid.
(3) Operating switch 600, a user can select a first jet pattern or a second jet pattern. As FIG. 2 shows, the first jet pattern does not suck the air from suction duct 70 to downstream cleansing duct 62, so that it discharges the cleaning fluid containing substantially no air bubbles from exhaust port 810. As FIGS. 3A and 3B show, the second jet pattern sucks the air from suction duct 70 into duct 62, so that it discharges the cleaning fluid containing air bubbles from exhaust port 810. Since switch 600 for selecting one of the jet patterns discussed above is provided to cleansing unit 100, the user can operates switch 600 with his/her hand that holds cleansing unit 100 for selecting one of the jet patterns. This structure thus provides the user with a simple operability.
(4) Oral cleansing device 10 includes suction duct 70 in cleansing unit 100, and suction duct 70 is connected to downstream cleansing duct 62 in cleansing unit 100. This structure allows main body 20 to be formed in a simpler way and further downsized comparing with a case where another suction duct having a function similar to that of duct 70 is prepared in main body 20, and this another suction duct is connected to duct 62 in cleansing unit 100.
(5) The structure described in item (4) allows shortening a distance between suction duct 70 and downstream cleansing duct 62, so that a structure related to suction duct 70 can be further simplified. Comparing with a case where another suction duct having a function similar to duct 70 is formed in main body 20, the structure described in item (4) also allows reducing a resistance in fluid channel of suction duct 70.
(6) Oral cleansing device 10 includes check valve 710 for suction duct 70, so that the cleaning fluid flowing through duct 62 can be prevented from being discharged outside cleansing unit 100. This structure allows an amount of the cleaning fluid discharged from exhaust port 810 to be hard to decrease, and prevents the user's hand that holds grip 200 from getting wet.
(7) Oral cleansing device 10 includes check valve 720 for cleansing duct 62. The presence of check valve 720 prevents the cleaning fluid or the air available on the downstream side from check valve 720 from flowing backward. Comparing with a case where no check valve is available, this structure allows increasing the negative pressure that is produced by the sucking action of pump 30 and acts on suction duct 70. As a result, a greater amount of the air is sucked from suction duct 70 into downstream cleansing duct 62.

### SECOND EXEMPLARY EMBODIMENT

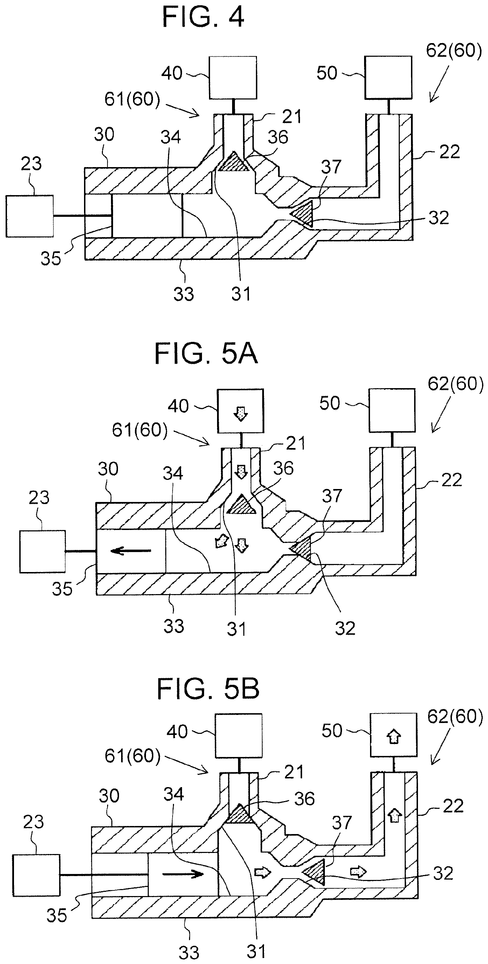

FIG. 4 shows pump 30 used in oral cleansing device 10 in accordance with the second embodiment. This pump 30 includes the following structural elements in addition to those described in the first embodiment. The structural elements used in this second embodiment with the same reference numbers as those in the first embodiment have functions or constructions similar to those of the corresponding elements used in the first embodiment.

As FIG. 4 shows, pump 30 is a reciprocating pump of positive displacement type, and more specifically it is a piston pump. Pump 30 includes not only suction port 31, exhaust port 32 but also cylinder 33 having pressurizing chamber 34, piston 35 disposed in chamber 34, upstream side check valve 36 disposed at suction port 31, and downstream side check valve 37 disposed at exhaust port 32. Suction port 31 of pump 30 is disposed at a lower part of tank 40.

An output shaft of motor 24 is connected to a motion conversion mechanism (not shown). Piston 35 is connected to the motion conversion mechanism, and is reciprocated with respect to cylinder 23 by driving force, which is transmitted via the motion conversion mechanism, of motor 24. The sucking action of pump 30 moves piston 35 along a direction increasing the capacity of pressurizing chamber 34, and also moves piston 35 along a direction decreasing the capacity of chamber 34.

The sucking action of pump 30 moves upstream side check valve 36 in a direction opening suction port 31, and the discharging action of pump 30 moves valve 36 in a direction closing suction port 31. The sucking action of pump 30 moves downstream side check valve 37 in a direction closing exhaust port 32, and the discharging action of pump 30 moves valve 37 in a direction opening exhaust port 32.

The action of pump 30 is demonstrated hereinafter with reference to FIGS. 5A and 5B. FIG. 5A shows an example of a state in which pump 30 carries out the sucking action. The sucking action of pump 30 generates a negative pressure in pressurizing chamber 34, and this negative pressure acts on upstream side check valve 36, suction port 31, downstream side check valve 37, and exhaust port 32. As the dotted arrows indicate, the cleaning fluid in tank 40 is sucked into pressurizing chamber 34 via suction port 31.

Upstream side check valve 36 moves in the opening direction, so that a fluid channel area of suction port 31 gradually increases. Downstream side check valve 37 moves in the closing direction, so that a fluid channel area of exhaust port 32 gradually decreases. When the capacity of pressurizing chamber 34 increases up to a first given capacity or during a process in which the capacity of chamber 34 increases, downstream side check valve 37 substantially closes exhaust port 32 as indicated by dotted arrows in FIG. 5A.

In a period from the start of moving along the closing direction until check valve 37 substantially closes exhaust port 32, the negative pressure produced in pressurizing chamber 34 acts on downstream side cleansing duct 62, suction duct check valve 710, and cleansing duct check valve 720 (refer to FIG. 3A). As FIG. 3A shows, during a case where suction duct 70 is not closed by switch 600, the sucking action of pump 30 allows check valve 710 to open suction duct 70, whereby the air is sucked from suction duct 70 into downstream side cleansing duct 62. Closing the duct 62, check valve 720 prevents the cleaning fluid or the air available on the downstream side from check valve 720 from flowing backward.

FIG. 5B shows an example of the discharging action of pump 30. After the capacity of pressurizing chamber 34 increases up to the first given capacity, piston 35 starts moving in a direction reducing the capacity of chamber 34. The discharging action of pump 30 compresses the cleaning fluid in chamber 34, so that the pressure of the cleaning fluid acts on upstream side check valve 36 and downstream side check valve 37.

This mechanism allows check valve 37 to move in the opening direction, so that the fluid channel area of exhaust port 32 gradually increases, and the cleaning fluid is discharged from pressurizing chamber 34 to downstream cleansing duct 62 via exhaust port 32 as indicated by dotted arrow.

Upstream side check valve 36 moves in the closing direction, so that the fluid channel area of suction port 31 gradually decreases. When the capacity of chamber 34 decreases to a second given capacity, or during a process in which the capacity of chamber 34 decreases, upstream side check valve 36 closes suction port 31 substantially as FIG. 5B shows.

As FIG. 3B shows, during a case where suction duct 70 is not closed with switch 600, the cleaning fluid discharged into downstream cleansing duct 62 by the discharging action of pump 30 is mixed with the air sucked into downstream cleansing duct 62 by the sucking action of pump 30. As a result, the cleaning fluid containing air bubbles is discharged from exhaust port 810 of nozzle 800.

Oral cleansing device 10 in accordance with the second embodiment produces advantage (8) below in addition to advantages (1) - (7) discussed in the first embodiment.
(8) Suction port 31 of pump 30 is disposed at a lower part of tank 40. During the sucking action of pump 30, the negative pressure produced by pump 30 and a deadweight of the cleaning fluid stored in tank 40 allow feeding the cleaning fluid from tank 40 to pressurizing chamber 34. This structure thus achieves a more stable flow of the cleaning fluid from tank 40 to pump 30 than a case where suction port 31 of pump 30 is disposed at a place other than the foregoing place.

### THIRD EXEMPLARY EMBODIMENT

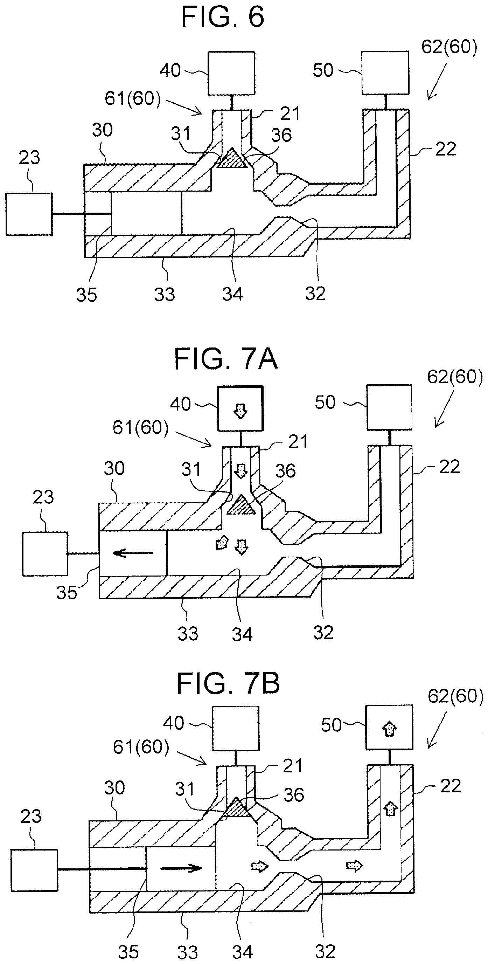

FIG. 6 shows pump 30 of oral cleansing device 10 in accordance with the third embodiment. This pump 30 includes the following structural elements in addition to those described in the first embodiment. The structural elements used in this third embodiment with the same reference numbers as those in the second embodiment have functions or constructions similar to those of the corresponding element used in the second embodiment.

As FIG. 6 shows, pump 30 is a reciprocating pump of a positive displacement type, and more specifically, it is a piston pump. This pump 30 omits downstream side check valve 37 (refer to FIG. 4) from pump 30 used in the second embodiment.

Operation of pump 30 is demonstrated hereinafter with reference to FIGS. 7A and 7B. FIG. 7A shows a sucking action of pump 30. The sucking action produces a negative pressure in pressurizing chamber 34, and the negative pressure acts on upstream side check valve 36, suction port 31, and exhaust port 32. This mechanism allows sucking cleansing fluid from tank 40 into chamber 34 via suction port 31 as indicated by dotted arrows, and allows upstream side check valve 36 to move in an opening direction, thereby increasing gradually a fluid channel area of suction port 31.

When a capacity of pressurizing chamber 34 increases up to a first given capacity, or during a process in which the capacity of chamber 34 increases, upstream side check valve 36 opens suction port 31 to the maximum.

In a period from the start of the sucking action until the sucking action ends, the negative pressure produced in pressurizing chamber 34 acts on downstream side cleansing duct 62, suction duct check valve 710, and check valve 720 for the cleansing duct (refer to FIG. 3A). As FIG. 3A shows, during a case where suction duct 70 is not closed with switch 600, the sucking action of pump 30 allows check valve 710 to open suction duct 70, whereby the air is sucked from suction duct 70 into downstream side cleansing duct 62. Closing the duct 62, check valve 720 prevents the cleaning fluid or the air available on the downstream side from check valve 720 from flowing backward.

FIG. 7B shows an example of the discharging action of pump 30. After the capacity of pressurizing chamber 34 increases up to the first given capacity, piston 35 starts moving in a direction reducing the capacity of chamber 34. The discharging action of pump 30 compresses the cleaning fluid in chamber 34, so that the cleaning fluid is discharged from chamber 34 to downstream side cleansing duct 62 via exhaust port 32 as indicated by the dotted arrows.

Since the pressure of the cleaning fluid acts on upstream side check valve 36, check valve 36 moves in the closing direction, so that the fluid channel area of suction port 31 decreases gradually. When the capacity of chamber 34 decreases to a second given capacity, or during a process in which the capacity of chamber 34 decreases, check valve 36 closes substantially suction port 31 as shown in FIG. 7B.

As FIG. 3B shows, during a case where suction duct 70 is not closed with switch 600, the cleaning fluid discharged into downstream cleansing duct 62 by the discharging action of pump 30 is mixed with the air sucked into downstream cleansing duct 62 by the sucking action of pump 30. As a result, the cleaning fluid containing air bubbles is discharged from exhaust port 810 of nozzle 800.

Oral cleansing device 10 in accordance with the third embodiment produces advantage (9) below in addition to advantages (1) - (7) discussed in the first embodiment.
(9) Oral cleansing device 10 does not have a check valve at exhaust port 32 of pump 30. This structure allows a greater negative pressure caused by the sucking action of pump 30 to act on downstream side cleansing duct 62 and suction duct 70 than the case where the check valve is disposed at exhaust port 32, so that a greater amount of air is sucked from suction duct 70 into downstream side cleansing duct 62. As a result, the cleaning fluid containing a greater amount of air bubbles is discharged from exhaust port 810 of nozzle 800.

### FOURTH EXEMPLARY EMBODIMENT

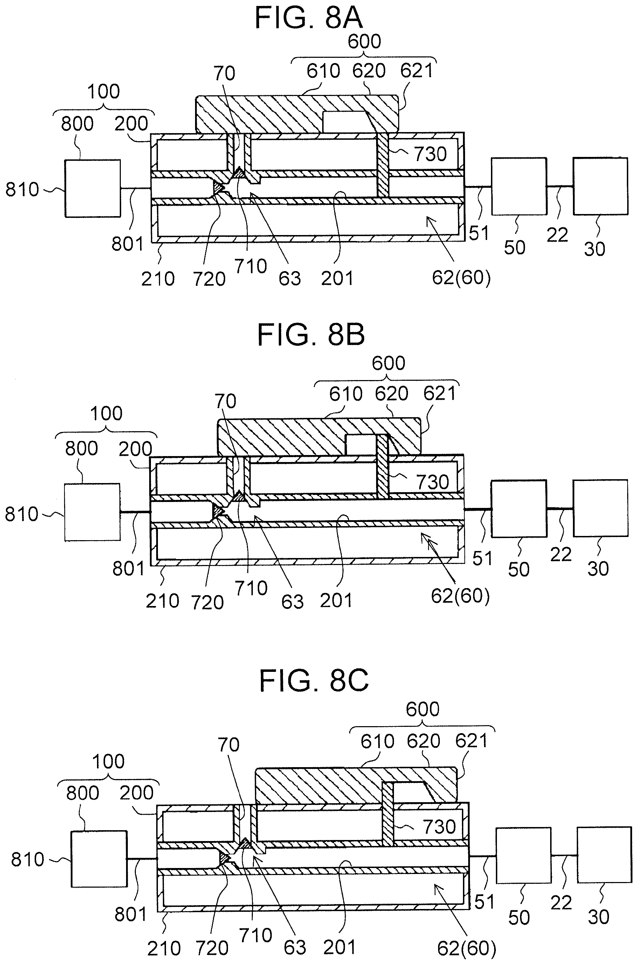

FIG. 8A shows cleansing unit 100 in accordance with the fourth embodiment. This cleansing unit 100 includes the structural elements below in addition to those of cleansing unit 100 used in the third embodiment. Elements having the same reference numbers as those in the third embodiment have constructions or functions similar to those of the corresponding elements in the third embodiment.

Cleansing unit 100 includes on-off valve 730 in the cleansing duct for opening or closing inner duct 201 (i.e. a part of downstream cleansing duct 62), and a check valve spring (not shown) that is capable of pushing on-off valve 730 in a direction opening inner duct 201. On-off valve 730 is disposed on the upstream side from duct connecting section 63 of downstream cleansing duct 62, and can be set to a position for opening duct 62 and a position for closing duct 62.

Switch 600 includes base 610 forming a main body of switch 600, and arm 620 extending from base 610. Arm 620 includes valve contact section 621 that is brought into contact with on-off valve 730.

Switch 600 has a function of opening or closing suction duct 70 as well as a function of changing a position of on-off valve 730 in the cleansing duct. Switch 600 can be set to a water-stop position shown in FIG. 8A, a first water-supply position shown in FIG. 8B, or a second water-supply position shown in FIG. 8C. Users can select any one of the forgoing positions by operating switch 600.

As FIG. 8A shows, when switch 600 is set at the first water-supply position, suction port 70 is closed, and arm 620 pushes on-off valve 730 with valve contact section 621, thereby moving on-off valve 730 to the duct closing position. Although the discharging action of pump 30 supplies the cleaning fluid to cleansing unit 100, the flow of the cleaning fluid is stopped by on-off valve 730. The cleaning fluid thus does not discharge from exhaust port 810 of nozzle 800.

As FIG. 8B shows, when switch 600 is set to the first water-supply position, suction port 70 is closed, and arm 620 does not push on-off valve 730 with valve contact section 621, so that on-off valve 730 is retained by the force of the valve spring at the duct opening position. As a result, the air is not actually sucked from suction duct 70 into downstream cleansing duct 62 although pump 30 carries out the sucking action.

During the discharging action of pump 30, the cleaning fluid discharged from pump 30 is discharged from exhaust port 810 of nozzle 800 via inner duct 201 of cleansing unit 100. In other words, when switch 600 is set to the first water-supply position, cleansing unit 100 discharges the cleaning fluid in the first jet pattern.

As FIG. 8C shows, when switch 600 is set to the second water-supply position, suction duct 70 is opened, and arm 620 does not push on-off valve 730 with valve contact section 621 in the direction closing the cleansing duct, and is retained by the force of the valve spring at the duct opening position. The sucking action of pump 30 thus sucks the air from suction duct 70 into downstream cleansing duct 62.

During the discharging action of pump 30, the cleaning fluid discharged from pump 30 is mixed with the air sucked into downstream cleansing duct 62, whereby the cleaning fluid containing air bubbles is discharged from exhaust port 810 of nozzle 800. In other words, when switch 600 is set to the second water-supply position, cleansing unit 100 discharges the cleaning fluid in the second jet pattern.

Oral cleansing device 10 in accordance with the fourth embodiment produces advantages (10) and (11) below in addition to advantages (1) - (7) and (9) obtained in the third embodiment.
(10) Oral cleansing device 10 includes one switch 600 that can select one of three actions related to cleansing unit 100. This structure allows cleansing unit 100 to be further downsized and providing users with better operability than a case in which multiple switches are prepared for selecting one of the actions related to cleansing unit 100.
(11) Oral cleansing device 100 switches the actions of cleansing unit 100 based on a structural relation among switch 600, suction duct 70, and on-off valve 730 in the cleansing duct. This structure can simplify the construction of cleansing unit 100 comparing with a case in which the actions of cleansing unit 100 are switched by an electrical mechanism.

### FIFTH EXEMPLARY EMBODIMENT

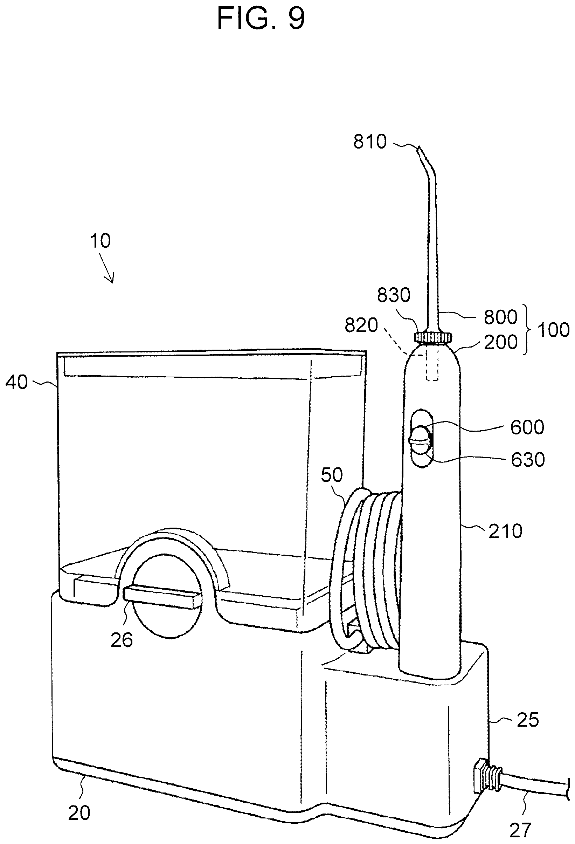

FIG. 9 is a perspective view of oral cleansing device 10 in accordance with the fifth embodiment. This oral cleansing device 10 includes the structural elements below in addition to those of oral cleansing device 10 in accordance with the fourth embodiment. Elements having the same reference numbers as those in the fourth embodiment have constructions or functions similar to those of the corresponding elements in the fourth embodiment.

Main body 20 of oral cleansing device 10 includes base 25 on which cleansing unit 100 is placed, dial 26 for users to adjust a pressure of the cleaning fluid discharged from cleansing unit 100, and power cord 27 for supplying electric power to power supply 23 (refer to FIG. 1). Dial 26 also has a function of turning on or off the power supply of pump 30.

Oral cleansing device 10 has a mounting structure with which users can select one of tank 40 mounted to main body 20 or tank 40 removed from main body 20.

Cleansing unit 100 has a mounting structure with which users can select one of nozzle 800 mounted to grip 200 or nozzle 800 removed from grip 200. Grip 200 and nozzle 800 are in elongated shapes as shown in FIG. 9.

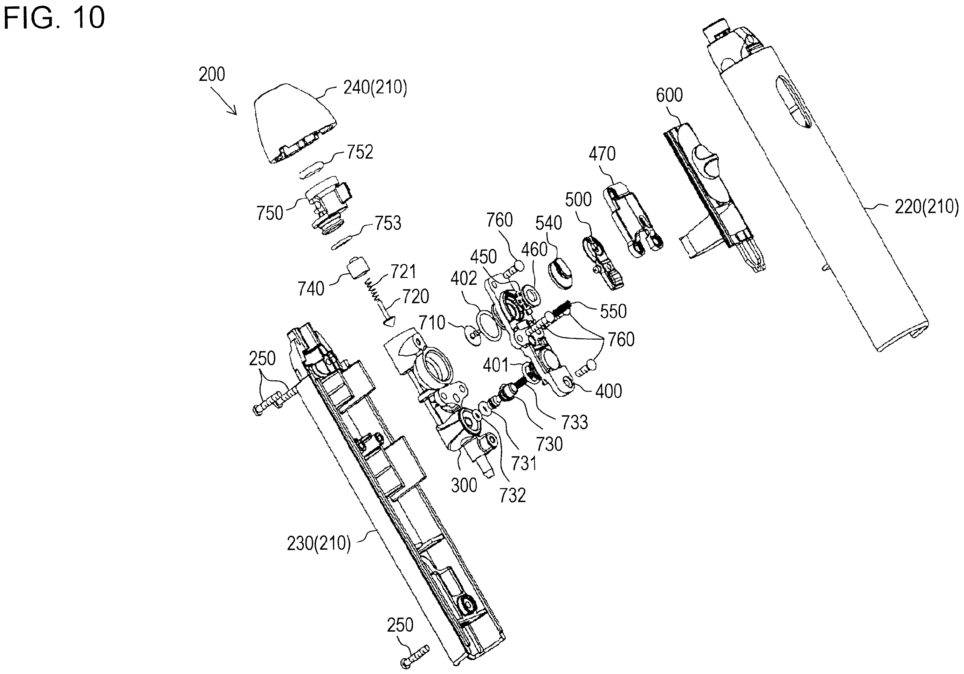

FIG. 10 is an exploded perspective view of grip 200, which includes downstream cleansing duct 62, suction duct 70, inner duct 201, switch 600, check valve 710 for the suction duct, check valve 720 for the cleansing duct, and on-off valve 730 for the cleansing duct. These structural elements have been already discussed in the previous embodiments. In addition to these elements, grip 200 further includes the multiple elements described below:
Switch 600, check valve 710 for the suction duct, check valve 720 for the cleansing valve, and on-off valve 730 for the cleansing duct are specific examples of those schematically illustrated in FIG. 8A.

Grip 200 includes first housing element 220 and second housing element 230, cap 240, and three screws 250 that rigidly combines first housing element 220 with second housing element 230 together. These elements form housing 210. Grip 200 further includes channel forming element 300, valve retaining element 740 that is a pipe to which check valve 720 is mounted, discharging pipe 750 into which connecting section 820 (refer to FIG. 9) of nozzle 800 is inserted.

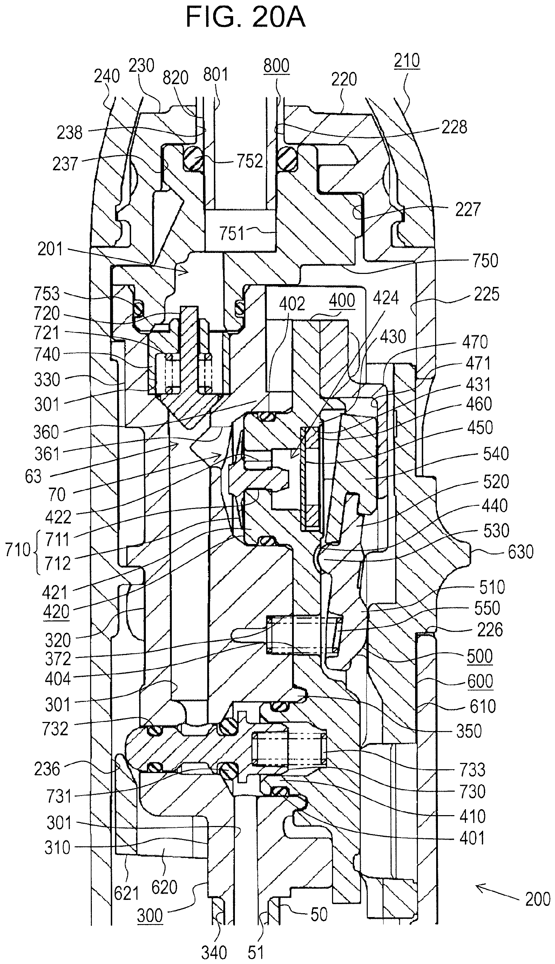

Grip 200 further includes base plate 400 to which check valve 710 is mounted, filter 450 disposed on suction duct 70 (refer to FIG. 20A), and stopper ring 460 for fixing filter 450 to base plate 400. Grip 200 still further includes first O-ring 402 to be mounted on an outer wall of accommodating boss 410 of base plate 400, and second O-ring 402 to be mounted on suction boss 420 of base plate 400.

Grip 200 yet further includes lever 500 revolving with respect to base plate 400, and lid 540 mounted to lever 500 for opening or closing suction duct 70 (refer to FIG. 20A).

Grip 200 further includes lever spring 550 that pushes lever 500 to close suction duct 70 with lid 540, and cover 470 that covers lever 500, lid 540, and filter 450 in order to prevent suction duct 70 from being closed.

Grip 200 also further includes four screws 760 for fixing channel forming element 300, base plate 400, and cover 470 to each other. FIG. 10 shows three screws 760, as an expedient, to be inserted into cover 470, and these three screws 760 are illustrated between cover 470 and base plate 400.

Grip 200 still further includes check-valve spring 721 for pushing check valve 720 in the cleansing duct along the closing direction, on-off valve spring 733 for pushing on-off valve 730 in the cleansing duct along the closing direction.

Grip 200 yet further includes nozzle O-ring 752 mounted on an inner wall of discharging pipe 750 for sealing the gap (refer to FIG. 20A) between pipe 750 and connecting section 820 of nozzle 800.

Grip 200 yet still includes O-ring 753 mounted on an outer wall of discharging pipe 750 for sealing the gap (refer to FIG. 20A) between channel forming element 300 and pipe 750.

Grip 200 further includes first valve O-ring 731 mounted on an outer wall of on-off valve 730 for the cleansing duct. O-ring 731 is urged against a wall of channel forming element 300, thereby closing inner duct 301 (refer to FIG. 20A).

Grip 200 still further includes second valve O-ring 732 mounted on the outer wall of on-off valve 730 for sealing the gap (refer to FIG. 20A) between valve 730 and channel forming element 300.

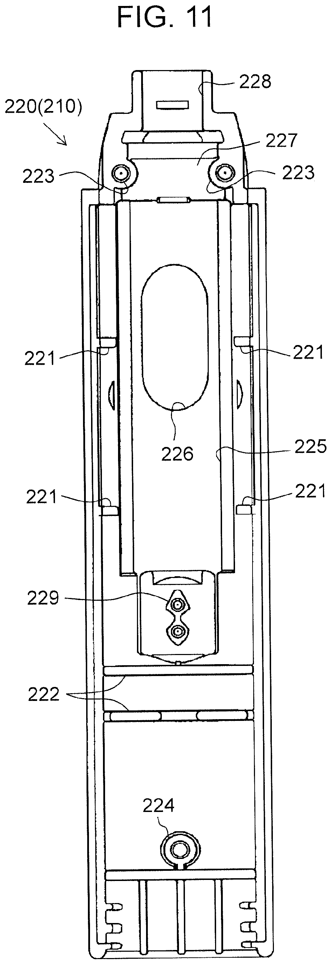

FIG. 11 shows a rear view illustrating a structure of first housing element 220, which includes housing guide-ribs 221 for reducing unsteadiness expected when first housing element 220 is combined with second housing element 230. First housing element 220 also includes tube-guide rib 222 for guiding tube 50 (refer to FIG. 9). First housing element 220 further includes two upper screw-bosses 223 into which screws 250 (refer to FIG. 10) for fixing the housing are screwed, and one lower screw-boss 224 into which screw 250 for fixing the housing is screwed.

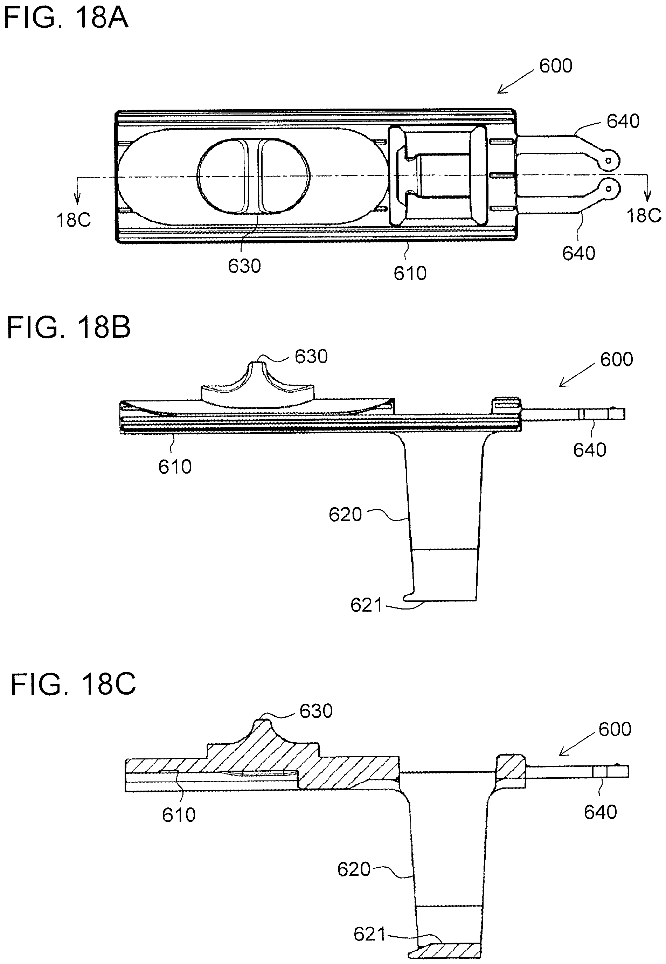

First housing element 220 further includes switch placement section 225 that forms a recess corresponding to a shape of base 610 of switch 600, and window 226 that forms a hole corresponding to a shape of knob 630 (refer to FIG. 18A) of switch 600.

First housing element 220 still includes discharging pipe placement section 227 that forms a recess corresponding to a shape of discharging pipe 750 (refer to FIG. 10), and nozzle placement section 228 that forms a recess corresponding to a shape of connecting section 820 (refer to FIG. 9) of nozzle 800. It yet further includes click box 229 having peaks and valleys so that a pair of click mechanism elements 640 (refer to FIG. 18A) of switch 600 can be deformed.

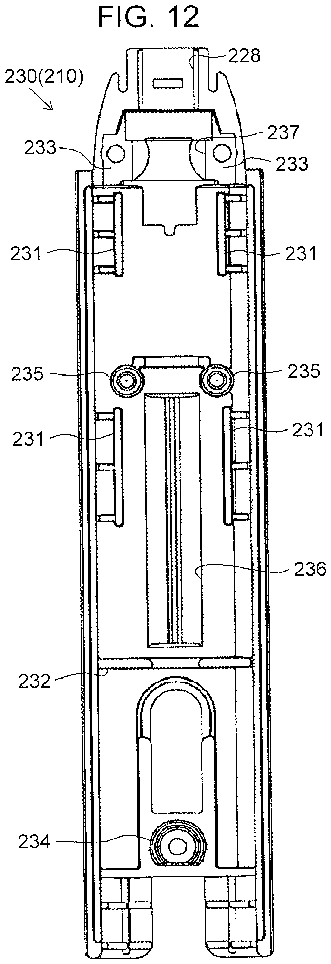

FIG. 12 is a rear view illustrating a structure of second housing element 230, which includes multiple switch-guide ribs 231 for guiding switch 600 (refer to FIG. 18A), and multiple tube-guide ribs 232 for guiding tube 50 (refer to FIG. 9). It further includes two upper screw-bosses 233 into which screws 250 (refer to FIG. 10) for fixing the housing are screwed, and one lower screw-boss 234 into which screw 250 for fixing the housing is screwed.

Second housing element 230 still further includes two middle screw bosses 235 into which screws 760 (refer to FIG. 10) are screwed, and arm placement section 236 that forms a recess corresponding to a shape of arm 620 (refer to FIG. 18A) of switch 600.

Second housing element 230 yet further includes discharging pipe placement section 237 that forms a recess corresponding to a shape of discharging pipe 750 (refer to FIG. 10), and nozzle placement section 238 that forms a recess corresponding to a shape of connecting section 820 (refer to FIG. 9) of nozzle 800.

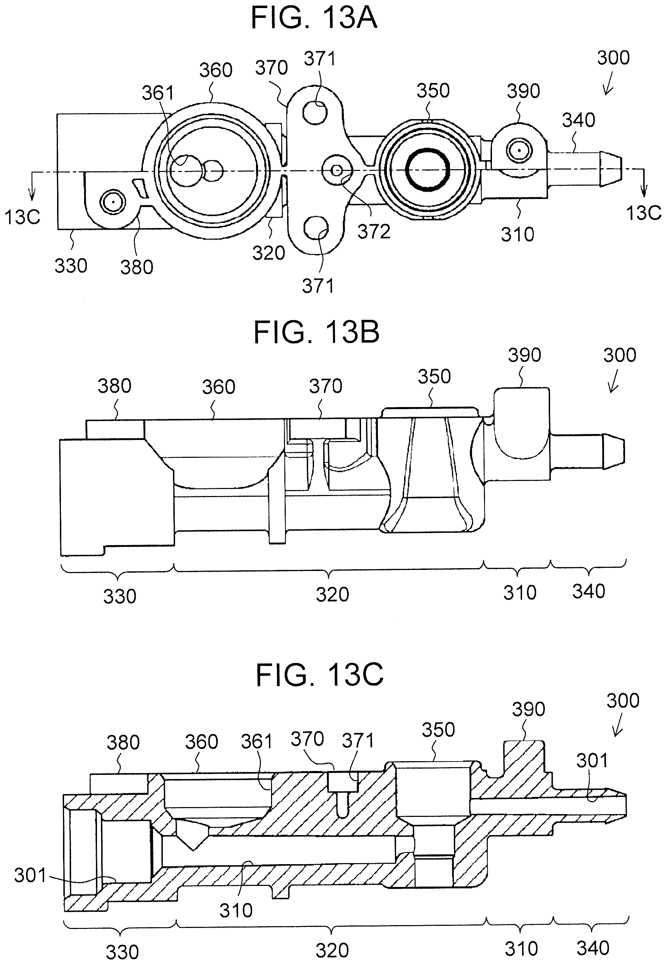

FIG. 13A shows a front view of channel forming element 300, FIG. 13B shows a lateral view of element 300, and FIG. 13C shows a sectional view of element 300 cut along line 13C - 13C in FIG. 13A.

Channel forming element 300 includes inner duct 301 through which the cleaning fluid and air flow, and elements that form individual sections of inner duct 301, such as element upstream section 310, element intermediate section 320, and element downstream section 330. Inner duct 301 forms a chief part of inner duct 201 of grip 200 (refer to FIG. 20A).

Channel forming element 300 further includes tube connecting section 340 to which tube 50 (refer to FIG. 9) is connected, on-off valve container 350 where on-off valve 730 is accommodated, and sucking section 360 that forms suction duct 70 (refer to FIG. 20A).

Channel forming element 300 still includes flange 370 in which element fixing screw 760 (refer to FIG. 10) is inserted, upper screw-boss into which screw 760 is screwed, lower screw boss 390 into which screw 760 is screwed.

Tube connecting section 340 protrudes from element upstream section 310, and on-off valve container 350 is formed in element intermediate section 320 at a place facing element upstream section 310. Sucking section 360 is formed in element intermediate section 320 at a place facing element downstream section 330. Flange 370 is formed between container 350 and sucking section 360. Upper screw boss 380 is formed in element upstream section 310, and lower screw boss 390 is formed in element downstream section 330.

On flange 370, screw-hole 371 into which element fixing screw 760 (refer to FIG. 10) is inserted, and spring placement hole 372 in which lever spring 550 (refer to FIG. 10) is placed are disposed.

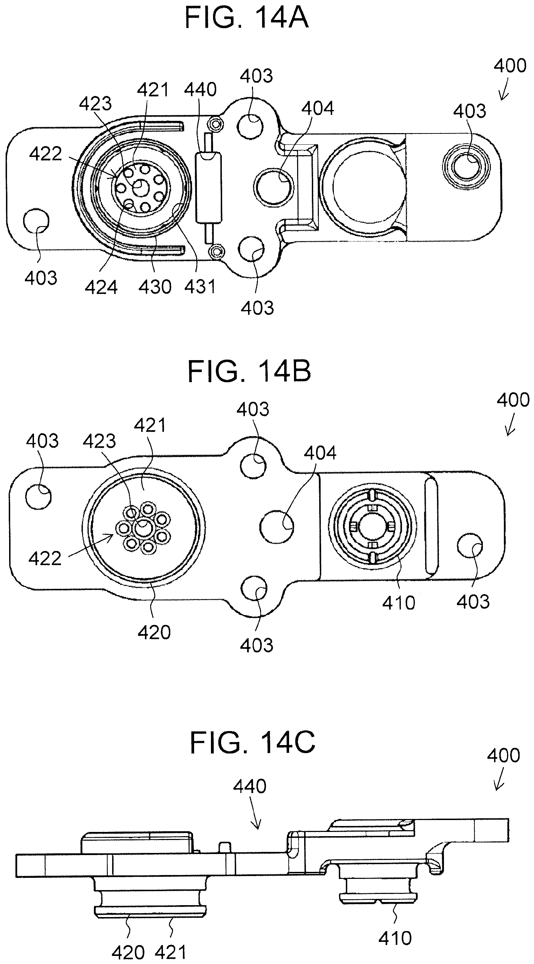

FIG. 14A shows a front view of base plate 400, FIG. 14B shows a rear view of base plate 400, and FIG. 14C shows a lateral view of base plate 400, which includes boss 410 accommodating on-off valve spring 733, suction boss 420 and sucking section 430 both forming suction duct 70 (refer to FIG. 20A), and lever placement section 440 forming a recess corresponding to a shape of lever 500.

Base plate 400 includes four screw-holes 403 into which element fixing screws 760 (refer to FIG. 10), and one spring hole 404 into which lever spring 550 is inserted.

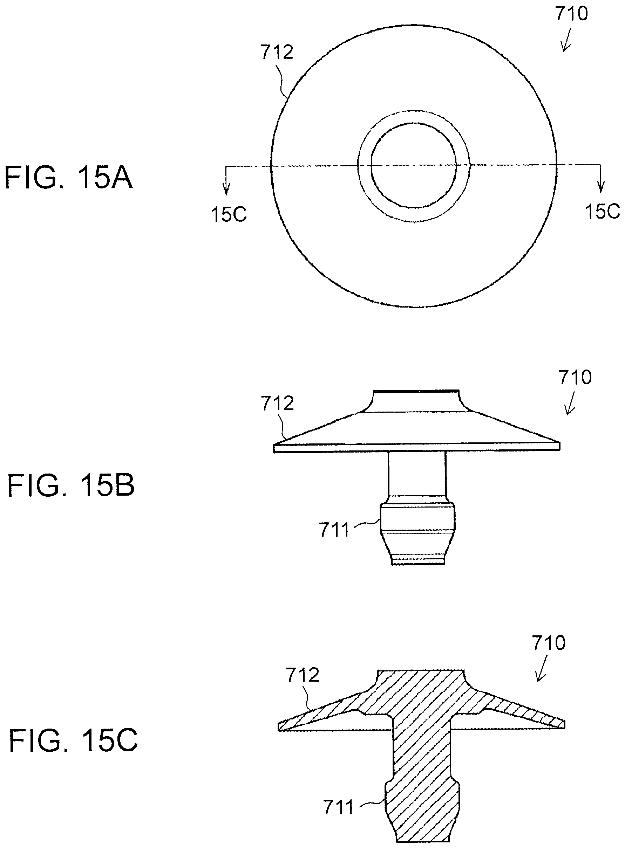

Suction boss 420 has a cylindrical shape, and partition 421 is formed at a place corresponding to a first opening of the cylindrical shape. Interior space 424 that is a space within the cylindrical shape forms a part of suction duct 70 (refer to FIG. 20A). In partition 421, multiple suction holes 422 that form parts of suction duct 70, and shaft hole 423 into which shaft 711 (refer to FIG. 15B) of check valve 710 is inserted are formed.

According to the example illustrated, seven suction holes 422 are formed in partition 421 such that they surround shaft hole 423. In sucking section 430, suction hole 431 is formed for communicating with inner space 424 of suction boss 420 and for forming suction duct 70 (refer to FIG. 20A). Filter 450 and stopper ring 460 (refer to FIG. 10) are fit in suction hole 431.

FIG. 15A is a plan view of check valve 710 for the suction duct, FIG. 15B is a front view of check valve 710, and FIG. 15C is a sectional view of check valve 710 cut along line 15C - 15C in FIG. 15A. Check valve 710 in accordance with the fifth embodiment is an actual example of check valve 710 schematically demonstrated in the fourth embodiment (refer to FIG. 8A), and has functions similar to those of check valve 710 used in the fourth embodiment.

Check valve 710 of this actual example is an umbrella type and made of highly resilient resin material. Check valve 710 is inserted into shaft hole 423 (refer to FIG. 14A) of suction boss 420, and includes shaft 711 to be fixed to suction boss 420, and umbrella 712 that opens or closes suction hole 422 of suction boss 420.

When the negative pressure does not act, umbrella 712 is brought into contact with partition 421 of suction boss 420 for closing suction hole 422, and an action of the negative pressure allows umbrella 712 to separate from partition 421 for opening suction hole 422.

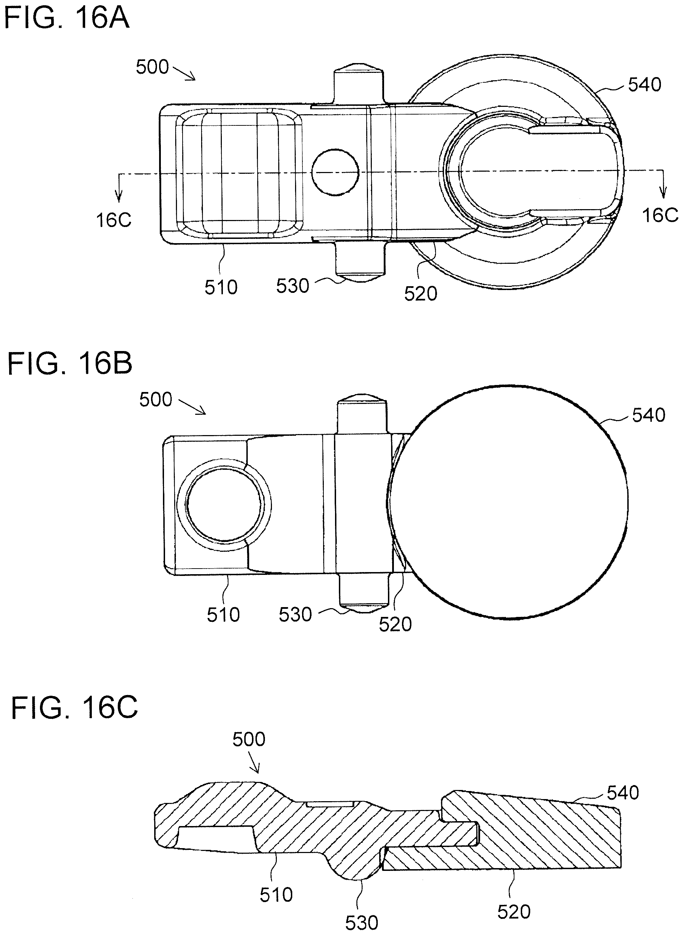

FIG. 16A is a front view of lever 500 and lid 540, FIG. 16B is a rear view thereof, and FIG. 16C is a sectional view thereof cut along line 16C - 16C in FIG. 16A. Lever 500 includes first lever 510 that is brought into contact with lever spring 550 (refer to FIG. 10), second arm 520 to which lid 540 is mounted, and shaft 530 to be placed in lever placement section 440 (refer to FIG. 14A) of base plate 400.

First arm 510 and second arm 520 extend opposite to each other with respect to shaft 530. Lid 540 has a shape corresponding to suction hole 431 (refer to FIG. 14A) of base plate 400, and is fixed to second arm 520. Lid 540 moves together with the revolving movement of lever 500 for opening or closing suction hole 431.

The placement of shaft 530 in lever placement section 440 (refer to FIG. 14A) allows lever 500 revolves with respect to base plate 400 on shaft 530 as a fulcrum. When first arm 510 is urged toward base plate 400 by base 610 (refer to FIG. 18A) of switch 600, lid 540 separates from base plate 400 for opening suction hole 431 (refer to FIG. 14A).

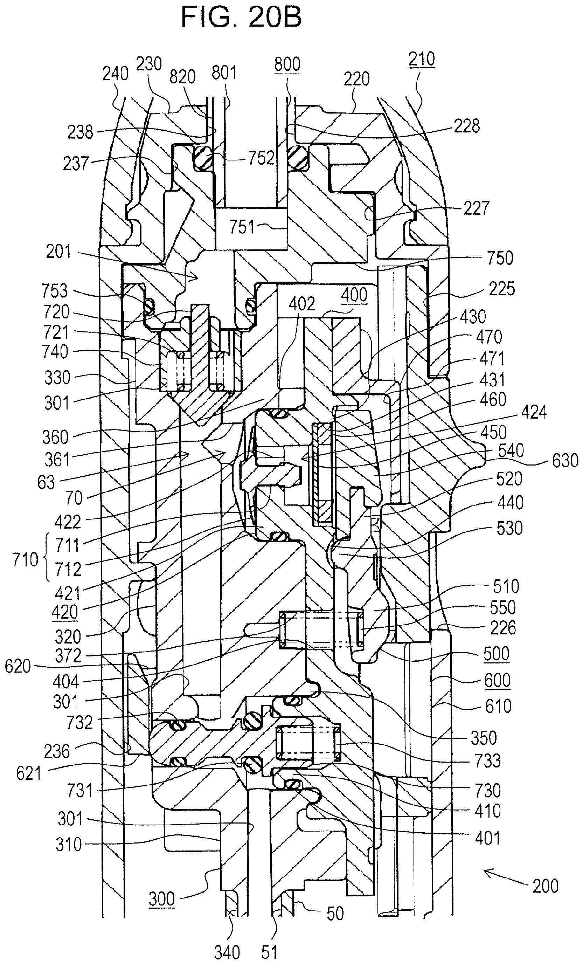

When lever spring 550 (refer to FIG. 10) shunts first arm 510 toward base 610 side of switch 600 (refer to FIG. 20B), lid 540 is brought into contact with base plate 400 for closing suction hole 431 (refer to FIG. 14A).

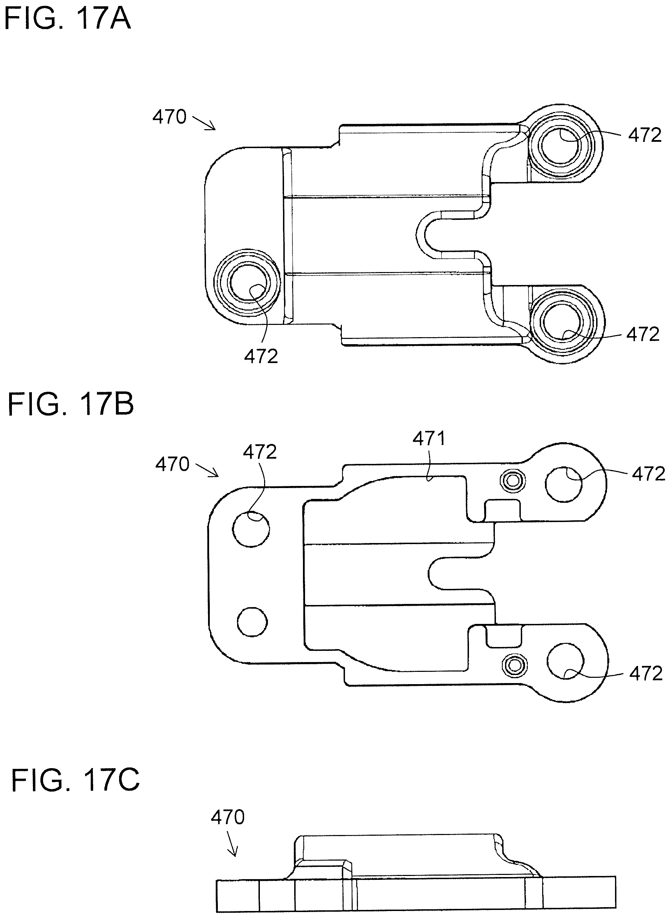

FIG. 17A is a front view of cover 470, FIG. 17B is a rear view thereof, and FIG. 17C is a lateral view thereof. Cover 470 includes container 471 forming a recess which accommodates lid 540 (refer to FIG. 16A) and a part of lever 500. Three screw-holes 472 are formed on cover 470 for receiving element fixing screws 760.

FIG. 18A is a front view of switch 600, FIG. 18B is a lateral view thereof, and FIG. 18C is a sectional view of switch 600 cut along line 18C - 18C in FIG. 18A. Switch 600 in accordance with the fifth embodiment is an actual example of switch 600 schematically illustrated in the fourth embodiment, and has similar functions to those of switch 600 used in the fourth embodiment.

Each of the same reference marks given to each element of switches 600 in the fourth and the fifth embodiments has a meaning that the function of the element corresponds to each other. As long as the functions of the elements can be actualized, the elements of switch 600 in accordance with the fifth embodiment can be in various structures which are not described in switch 600 used in the fourth embodiment.

Switch 600 includes vertically oriented base 610, arm 620 extending behind base 610 and curved like a letter U, knob 630 protruding from a front of base 610, and a pair of click functional elements 640.

On the rear face of base 610, peaks and valleys are formed for urging first arm 510 (refer to FIG. 16C) of lever 500 toward base place 400 and shunting first arm 510 toward base 610.

Arm 620 forms an inner space into which channel forming element 300 and base plate 400 (refer to FIG. 10) are inserted. Knob 630 protrudes from window 226 (refer to FIG. 11) of first housing element 220, and is movable within window 226 with respect to housing 210.

The pair of click functional elements 640 has a columnar shape, and a circular section is formed at its end. It clips click boss 229 (refer to FIG. 11) of first housing element 220 at both sides.

Movement of switch 600 with respect to first housing element 220 allows the pair of click functional elements 640 deforms while elements 640 are brought into contact with click boss 229, and force is generated when the deformed elements 640 restore to the original shape. This force generated by the pair of click functional elements 640 is conveyed to knob 630, thereby giving click-feeling to a user's hand.

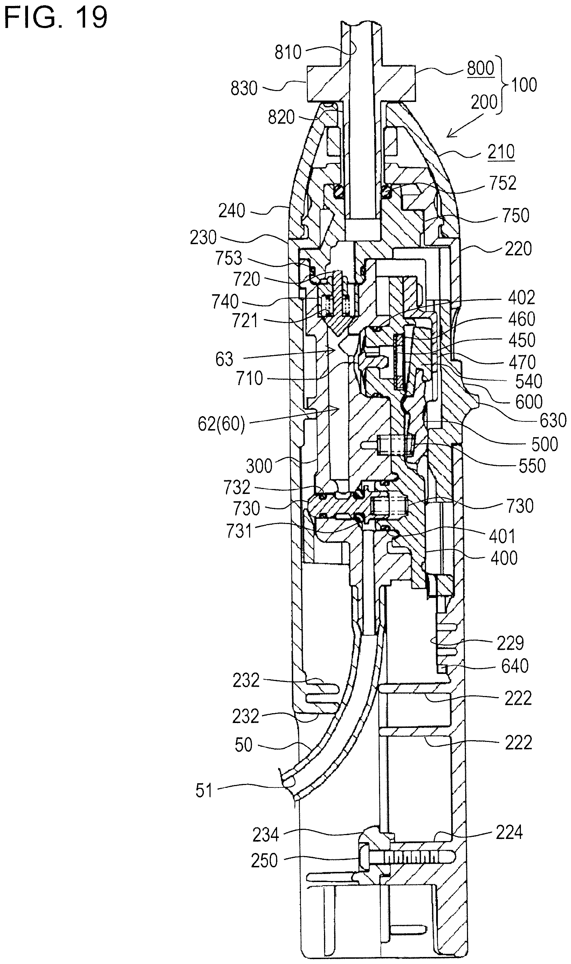

Procedures of coupling each element of grip 200 together are described hereinafter with reference to FIGS. 10, 19, and 20A. FIG. 19 is a sectional view of grip 200 and nozzle 800 cut along a longitudinal center line of grip 200 and nozzle 800. FIG. 20A is an enlarged sectional view of a part of grip 200 shown in FIG. 19. The following procedures are an example of how to couple the elements together, and they do not limit the method for assembling grip 200.

Check valve spring 721 is mounted on check valve 720, which is then mounted to valve retaining element 740. As FIG. 20A shows, valve retaining element 740 is fitted into inner duct 301 of element downstream section 330 of channel forming element 300.

Each element is coupled together as discussed above, whereby check valve spring 721 is urged against a wall of element intermediate section 320 of channel forming element 300 by the force of check valve spring 721, which thus closes inner duct 301.

Nozzle O-ring 752 is mounted inside discharging pipe 750, and pipe-outside O-ring 753 is mounted outside discharging pipe 750. As FIG. 20A shows, discharging pipe 750 is fitted in inner duct 301 that is coupled to valve retaining element 740.

Each element is coupled together as discussed above, whereby valve retaining element 740 is sandwiched between an inlet section of discharging pipe 750 and channel forming element 300. The space between an outer wall of pipe 750 and inner wall of element downstream section 330 of channel forming element 300 is sealed by pipe-outside O-ring 753.

First valve O-ring 731, second valve O-ring 732, and on-off valve spring 733 are mounted on on-off valve 730 shown in FIG. 10. As FIG. 20A shows, this on-off valve 730 is inserted in on-off valve container 350 of channel forming element 300. On top of that, lever spring 550 is placed in spring placement hole 372 of flange 370 of channel forming element 300.

Each element is coupled together as discussed above, whereby first valve O-ring 731 is brought into contact with an inner wall of on-off valve container 350, thereby closing inner duct 301 of channel forming element 300. Second valve O-ring 732 seals the space between the inner wall of on-off valve container 350 and the outer wall of on-off valve 730 in the cleansing duct.

First boss O-ring 401 is mounted on accommodating boss 410 (refer to FIG. 14C) of base plate 400 shown in FIG. 10, and second boss O-ring 402 is mounted on suction boss 420 (refer to FIG. 14C). Shaft 711 (refer to FIG. 15B) of check valve 710 to be disposed in the suction duct is inserted into shaft hole 423 (refer to FIG. 14B) of partition 421 of base plate 400. Filter 450 is placed in suction hole 431 (refer to FIG. 14A) of sucking section 430, and stopper ring 460 is fit into suction hole 431 of sucking section 430 such that stopper ring 460 is overlaid on the rim of filter 450.

As FIG. 20A shows, base plate 400 to which filter 450 and stopper ring 460 are coupled is laid on channel forming element 300. At this time, accommodating boss 410 is fit into on-off valve container 350 of channel forming element 300 as well as suction boss 420 is fit into sucking section 360 of channel forming element 300.

Each element is coupled together as discussed above, whereby a part of on-off valve 730 and on-off valve spring 733 are accommodated in accommodating boss 410. This structure allows spring 733 to be compressed between base plate 400 and on-off valve 730, and first valve O-ring 731 mounted on on-off valve 730 is strongly urged against the wall of on-off valve container 350.

The space between an outer wall of accommodating boss 410 and an inner wall of on-off valve container 350 is sealed by first boss O-ring 401. Check valve 710 for the suction duct is accommodated in sucking section 360 of channel forming element 300, and the space between an outer wall of suction boss 420 and an inner wall of sucking section 360 is sealed by second boss O-ring 402. Lever spring 550 placed in spring placement hole 372 of channel forming element 300 protrudes from spring hole 404 of base plate 400.

As FIG. 20A shows, lever 500 with lid 540 fixed thereto is provided to base plate 400 that is laid on channel forming element 300, and an end of lever spring 550 projecting from base plate 400 is fit in first arm 510 of lever 500. On top of that, cover 470 shown in FIG. 10 is laid on base plate 400 such that it covers lid 540 and lever 500.

One element fixing-screw 760 shown in FIG. 10 is inserted into screw hole 472 (refer to FIG. 17A) of cover 470 and screw hole 403 (refer to FIG. 14A) of base plate 400, and then is screwed into upper screw boss 380 (refer to FIG. 13A) of channel forming element 300. Another element fixing-screw 760 shown in FIG. 10 is inserted into screw-hole 403 (refer to FIG. 14A) and then screwed into lower screw boss 390 (refer to FIG. 13A) of channel forming element 300. Screwing these two element fixing screws 760 into corresponding bosses allows base plate 400 to be rigidly mounted to channel forming element 300 as shown in FIG. 20A.

Two element-fixing screws 760 shown in FIG. 10 and different from the foregoing screws 760 are inserted into screw holes 472 (refer to FIG. 17A) of cover 470, screw holes 403 (refer to FIG. 14A) of base plate 400, and screw hole 371 (refer to FIG. 13A) of channel forming element 300, and then these screws 760 are screwed in middle screw bosses 235 (refer to FIG. 12) of housing element 230.

Screwing these two element fixing screws 760 into the corresponding bosses allows channel forming element 300 to be fixed to second housing element 230 as shown in FIG. 20A.

Switch 600 is coupled to channel forming element 300 and base plate 400 such that channel forming element 300 and parts of base plate 400 can be put in the inner space (refer to FIG. 18C) of arm 620 of switch 300 shown in FIG. 10.

Each element is coupled together as discussed above, whereby base 610 of switch 600 is disposed on the front side of cover 470 and lever 500 as shown in FIG. 20A, and valve-contact section 621 of arm 620 is disposed between second housing element 230 and channel forming element 300. A rear face of base 610 is brought into contact with first arm 510 of lever 500 for pushing arm 510 toward base plate 400, whereby lid 540 is separated from sucking section 430 of base plate 400.

A revolving position of lever 500 changes in response to a position of switch 600 along the longitudinal direction of channel forming element 300. Switch 600 is thus sometimes combined with channel forming element 300 to take a revolving position different from the position discussed above.

Tube 50 shown in FIG. 9 is connected to tube connecting section 340 (refer to FIG. 13A), and this tube 50 is routed to the outside of second housing element 230 via a cut-away portion of second housing element 230.

First housing element 220 shown in FIG. 10 is laid on second housing element 230. Two housing-fixing screws 250 shown in FIG. 10 are inserted into upper screw bosses 233 (refer to FIG. 12) of second housing element 230, and then screwed into upper-screw bosses 223 (refer to FIG. 11) of first housing element 220. Another housing-fixing screw 250 shown in FIG. 10 is inserted into lower-screw boss 234 of second housing element 230, and then screwed into lower-screw boss 224 (refer to FIG. 11) of first housing element 220. On top of that, cap 240 shown in FIG. 10 are fit to upper sections of first and second housing elements 220 and 230.

Each element is coupled together as discussed above, whereby housing 210 is formed as shown in FIG. 20A, and structural elements such as channel forming element 300, base plate 400, and switch 600 are accommodated in the space within housing 210, whereby grip 200 is assembled. Knob 630 of switch 600 protrudes from window 226 of first housing element 220 to the outside of housing 210.

As FIG. 19 shows, connecting section 820 of nozzle 800 is inserted into cap 240 of grip 200 and discharging pipe 750, so that flange 830 of nozzle 800 hits against cap 240. Each element is coupled together as discussed above, whereby cleansing unit 100 is assembled.

Downstream cleansing duct 62 and suction duct 70 are described hereinafter with reference to FIG. 20A. Cleansing unit 100 includes a part of downstream cleansing duct 62 which is formed of inner duct 201 of grip 200 and inner duct 801 of nozzle 800. Inner duct 201 of grip 200 includes tube connecting section 340, inner duct 301 of element upstream section 310, inner duct 301 of element intermediate section 320, inner duct 301 of element downstream section 330, and inner duct 751 of discharging pipe 750. Inner duct 301 of element intermediate section 320 includes inner duct 301 of on-off valve container 350 where on-off valve 730 for the cleansing duct is disposed. Inner duct 301 of element downstream 330 includes a duct formed inside valve retaining element 740.

Cleansing unit 100 is equipped with suction duct 70, which includes a space around cover 470 within housing 210, a space inside cover 470, suction hole 431, inner space 424, and suction hole 422 of base plate 400. Suction duct 70 further includes a space and suction hole 361 of sucking section 360 of channel forming element 300. Suction hole 361 communicates with inner duct 301 of element intermediate section 320, and this communicating section corresponds to duct connecting section 63.

Check valve 710 for the suction duct is mounted to suction boss 420 of base plate 400, so that it is disposed in suction duct 70. Suction hole 422 of base plate 400 is closed or opened by check valve 710, whereby suction duct 70 is closed or opened.

Check valve 720 for the cleansing duct is mounted to valve retaining element 740 and disposed in inner duct 301 of element downstream section 330, so that it is placed on a downstream side from duct connecting section 63 in downstream cleansing duct 62. Inner duct 301 is closed or opened by check valve 720, whereby downstream cleansing duct 62 is closed or opened on the downstream side from duct connecting section 63.

On-off valve 730 for the cleansing duct is disposed in on-off valve container 350 of channel forming element 300, so that it is placed on the upstream side from duct connecting section 63 in downstream cleansing duct 62. Inner duct 301 is closed or opened by on-off valve 730, whereby downstream cleansing duct 62 is closed or opened on the upstream side from duct connecting section 63.

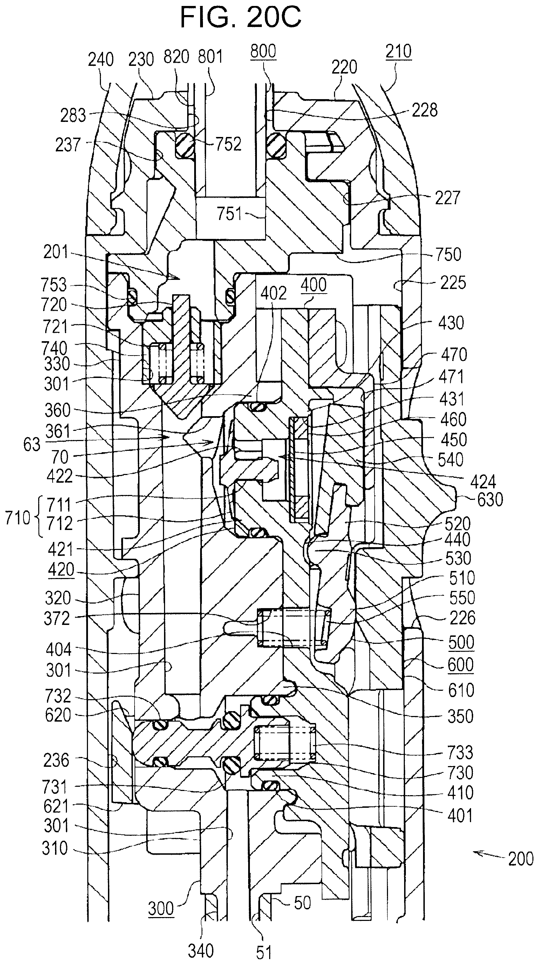

Actions of cleansing unit 100 are demonstrated hereinafter with reference to FIG. 20A - FIG. 20C. A user operates knob 630 of switch 600, thereby changing the position of switch 600 with respect to housing 210 from the water-stop position shown in FIG. 20A, to the first water-supply position shown in FIG. 20B, or to the second water-supply position shown in FIG. 20C.

As FIG. 20A shows, knob 630 is set to a lower position in window 226, so that switch 600 takes the water-stop position. Knob 630 is pushed up from the lower position to an intermediate position in window 226, so that switch 600 changes its position from the water-stop position to the second water-supply position shown in FIG. 20C. Knob 630 is then pushed up from the intermediate position to an upper position in window 226, so that switch 600 changes its position from the second water-supply position to the first water-supply position shown in FIG. 20B.

When switch 600 changes its position from the water-stop position shown in FIG. 20A to the second water-supply position shown in FIG. 20C, the pair of click functional elements 640 (refer to FIG. 18A) climbs over a peak of click-boss 229 (refer to FIG. 11) while elements 640 deform. After climbing over the peaks, elements 640 move to a valley of click-boss 229 while elements 640 restore to the original shape. The restoring force of click functional elements 640 is transferred to knob 630, thereby giving a click feeling to the user's hand via knob 630.

When switch 600 changes its position from the second water-supply position shown in FIG. 20C to the water-stop position shown in FIG. 20A, the restoring force similar to what is discussed above gives the click feeling to user's hand via knob 630.

When switch 600 changes its position from the second water-supply position shown in FIG. 20C to the first water-supply position shown in FIG. 20B, the pair of click functional elements640 (refer to FIG. 18A) climbs over a peak of click-boss 229 (refer to FIG. 11) while elements 640 deform. After climbing over the peak, elements 640 moves to the foot of the peak while elements 640 restore to the original shape. The restoring force of elements 640 is transferred to knob 630, thereby giving the click feeling to the user's hand via knob 630.

When switch 600 changes its position from the first water-supply position shown in FIG. 20B to the second water-supply position shown in FIG. 20C, a restoring force similar to what is discussed above gives the click feeling to the user's hand via knob 630.

As FIG. 20A shows, when switch 600 is set to the water-stop position, first arm 510 is urged by a projection of base 610 toward base plate 400, whereby lid 540 is separated from sucking section 430 of base plate 400 for opening suction duct 70. When a negative pressure does not act on inner duct 301 of element intermediate section 320, umbrella 712 of check valve 710 for the suction duct is brought into contact with partition 421 of base plate 400 for closing suction hole 422.

Valve contacting section 621 of arm 620 is brought into contact with on-off valve 730 with a force not enough for moving on-off valve 730 to the opening direction, and a force of on-off valve spring urges first valve O-ring 731 against the wall of on-off valve container 350. As a result, on-off valve 730 closes inner duct 301 of element intermediate section 320, and downstream cleansing duct 62 is closed in grip 200.

When a pressure of the cleaning fluid does not act on check valve 720 from the upstream side of downstream cleansing duct 62, valve spring 721 urges check valve 720 against the wall of element downstream section 330, so that check valve 720 closes inner duct 301 of element downstream section 330, and downstream cleansing duct 62 is closed in grip 200.

When switch 600 is set to the water-stop position, the cleaning fluid is not discharged from exhaust port 810 (refer to FIG. 9) of nozzle 800, although the discharging action of pump 30 (refer to FIG. 1) allows supplying the cleaning fluid to downstream cleansing duct 62.

As FIG. 20B shows, when switch 600 is set to the first water-supply position, base 610 does not urge first arm 510 toward base plate 400, but first arm 510 separates from base plate 400 due to a force of lever spring 550 and shunts into the recess of base 610.

Lid 540 is urged by the force of lever spring 550 against sucking section 430 of base plate 400, and lid 540 closes suction hole 431 for closing suction duct 70. When the negative pressure does not act on inner duct 301 of element intermediate section 320, umbrella 712 of on-off valve 710 is brought into contact with partition 421 of base plate 400 for closing suction hole 422.

Resisting the force of on-off valve spring 733, valve contacting section 621 of arm 620 moves on-off valve 730 along the opening direction, whereby first valve O-ring 731 is separated from the wall of on-off valve container 350. As a result, on-off valve 730 opens inner duct 301 of element intermediate section 320 for opening downstream duct 62.

When switch 600 is set to the first water-supply position, the cleaning fluid is discharged from exhaust port 810 (refer to FIG. 9) of nozzle 800 in the following manners in response to the sucking action and the discharging action of pump 30 (refer to FIG. 1):
The sucking action of pump 30 produces a negative pressure in pressurizing chamber 34 (refer to FIG. 6) which acts on downstream cleansing duct 62, check valve 710 for suction duct 70, and check valve 720 for cleansing duct 62. Since suction duct 70 is closed by lid 540, check valve 710 does not separate from partition 421 of base plate 400, so that suction hole 422 is kept being closed by check valve 710.

This mechanism substantially prevents the air from being sucked from suction duct 70 into downstream cleansing duct 62. Since inner duct 301 is closed by check valve 720, the cleaning fluid or the air available on the downstream side from check valve 720 is prevented from flowing backward by check valve 720.

The discharging action of pump 30 allows the cleaning fluid discharged from pump 30 into tube 50 to flow in inner duct 301 of channel forming element 300 through tube connecting section 340, element upstream section 310, and element intermediate section 320 in this order. The pressure of this cleaning fluid acts on check valve 720 to open inner duct 301, so that the cleaning fluid flows from element intermediate section 320 to element downstream section 330.

Since suction hole 422 of base plate 400 is closed by check valve 710 for suction duct 70, the cleaning fluid flowing in element intermediate section 320 is prevented from flowing into suction hole 422 by check valve 710.

The cleaning fluid passes through check valve 720 flows from inner duct 301, which is a part of inner duct 201 of grip 200, of channel forming element 300 into inner duct 801 of nozzle 800, and spouts from exhaust port 810 (refer to FIG. 9) of nozzle 800.

The sucking action of pump 30 does not cause the air to be substantially sucked from suction duct 70 into downstream cleansing duct 62, so that the discharging action of pump 30 does not substantially mix the cleaning fluid with the air in inner duct 201 of grip 200. As a result, the cleaning fluid discharged from exhaust port 810 does not substantially contain air bubbles.

As FIG. 20C shows, when switch 600 is set to the second water-supply position, first arm 510 is urged by a projection of base 610 toward base plate 400, so that lid 540 separates from sucking section 430 of base plate 400 for opening suction duct 70. When the negative pressure does not act on inner duct 301 of element intermediate section 320, umbrella 712 of check valve 710 is brought into contact with partition 421 of base plate 400 for closing suction hole 422.

Resisting the force of on-off valve spring 733, valve contacting section 621 of arm 620 moves on-off valve 730 along the opening direction, whereby first valve O-ring 731 is separated from the wall of on-off valve container 350. As a result, on-off valve 730 opens inner duct 301 of element intermediate section 320 for opening downstream cleansing duct 62.

When switch 600 is set to the second water-supply position, the cleaning fluid is discharged from exhaust port 810 (refer to FIG. 9) of nozzle 800 in the following manners in response to the sucking action and the discharging action of pump 30 (refer to FIG. 1):
The sucking action of pump 30 produces a negative pressure in pressurizing chamber 34 (refer to FIG. 6), and the negative pressure acts on downstream cleansing duct 62, check valve 710 for suction duct 70, and check valve 720 for cleansing duct 62. When switch 600 is set to the second water-supply position, lid 540 dose not close suction duct 70, so that the air inside cover 470 can be sucked into suction hole 431 of sucking section 430.

This structure allows the negative pressure acting on check valve 710 causes check valve 710 to separate from partition 421 of base plate 400, and opens suction hole 422, thereby opening suction duct 70. As a result, the air is sucked from suction duct 70 into downstream cleansing duct 62.

Since inner duct 301 of element downstream section 330 is closed by check valve 720 for cleansing duct 62, the cleaning fluid or the air available on the downstream side from check valve 720 is prevented from flowing backward by check valve 720.

The discharging action of pump 30 allows the cleaning fluid discharged from pump 30 into tube 50 to flow in inner duct 301 of channel forming element 300 through tube connecting section 340, element upstream section 310, and element intermediate section 320 in this order.

The cleaning fluid discharged from pump 30 flows through inner duct 301 of channel forming element 300, which is a part of downstream cleansing duct 62. This cleaning fluid is mixed with the air sucked by the sucking action of pump 30 from suction duct 70 into inner duct 301 of element intermediate section 320, and the resultant fluid reaches check valve 720.

This mechanism allows the pressure of the cleaning fluid to act on check valve 720 in cleansing duct 62, so that check valve 720 opens inner duct 301 of element downstream section 330. As a result, the cleaning fluid flows from element intermediate section 320 to element downstream section 330.

The cleaning fluid containing air bubbles and passing through check valve 720 flows into inner duct 801 of nozzle 800 via inner duct 301, which is a part of inner duct 201, of channel forming element 300. This fluid then spouts from exhaust port 810 (refer to FIG. 9) pf nozzle 800.

An amount of the air sucked from suction duct 70 into downstream cleansing duct 62 can be adjusted with various parameters related to each structural element of oral cleansing device 10. The parameters include, for instance, a diameter of cylinder 33 (refer to FIG. 6), a stroke of piston 35 (refer to FIG. 6), availability of a check valve at exhaust port 32 of pump 30 (refer to FIG. 6), and a length of downstream cleansing duct 62.

The parameters also include a channel area of duct 62, a hardness of tube 50 (refer to FIG. 9), a channel area of suction duct 70, availability of check valve 720, a location of check valve 720, and a roughness of filter 450.

The fifth embodiment proves that oral cleansing device 10 produces advantages (10) and (11) below in addition to advantages (1) - (7) and (9) obtained by oral cleansing device 10 in accordance with the fourth embodiment.
(10) Cleansing unit 100 is equipped with filter 450 in suction duct 70. This structure allows filter 450 to prevent external foreign matters from entering downstream cleansing duct 62 via suction duct 70. As a result, the cleaning fluid containing the foreign matters can be prevented from being discharged from exhaust port 810 of nozzle 800, or the foreign matters are prevented from clogging duct 62.
(11) Cleansing unit 100 is equipped with cover 470. This structure allows cover 470 to prevent sometimes external water having entered inside cleansing unit 100 from permeating sucking section 430 of base plate 400. The water containing foreign matters or dirt thus hard to enter downstream side cleansing duct 62. The permeation of the water into sucking section 430 of base plate 400 will cause a reduction in an amount of air to be sucked from suction duct 70 into duct 62; however, this structure prevents this reduction.

### Modified Examples

Descriptions of each of the embodiments describe examples of possible embodiments of the oral cleansing device of the present disclosure, and they do not intend to limit the embodiments. The oral cleansing device of the present disclosure can be modified as the following examples besides each one of the embodiments discussed previously.
1. A modified example of oral cleansing device 10 in accordance with the first embodiment is equipped with suction duct 70 that communicates between a space inside housing 210 and inner duct 201 of grip 200.
2. A modified example of oral cleansing device 10 in accordance with the second embodiment includes a similar structure related to switch 600 of the fourth embodiment and is equipped with on-off valve 730 for the cleansing duct, and this valve 730 has a similar function to that of on-off valve 730 of the fourth embodiment.
3. A modified example of oral cleansing device 10 in accordance with the fifth embodiment omits lever 500 and lid 540, and instead of these omitted elements, device 10 includes a structure which allows switch 600 to open or close directly suction duct 70.
4. A modified example of oral cleansing device 10 in accordance with the fifth embodiment includes a first switch and a second switch replacing switch 600 that switches three actions related to cleansing unit 100. The first switch changes the position of on-off valve 730, thereby switching the states related to opening or closing downstream cleansing duct 62. The second switch changes a revolving position of lever 500, thereby switching the states relating to opening or closing suction duct 70.
5. A modified example of oral cleansing device 10 in accordance with the fifth embodiment includes a structure that sucks air from main body 20 into downstream cleansing duct 62 in grip 200. This structure replaces the structure that sucks the air from an interior space of grip 200 into duct 62. This oral cleansing device 10 includes, for instance, a connecting section formed in main body 20, and a sucking tube connected to a connecting section formed in cleansing unit 100. Main body 20 includes a suction duct that supplies air from the connecting section of main body 20 to the connecting section of cleansing unit 100 (hereinafter this suction duct is referred to as a suction duct for sucking tube). Cleansing unit 100 includes a suction duct (hereinafter referred to as a suction duct for cleansing unit 100) that communicating between the connecting section of cleansing unit 100 and downstream cleansing duct 62.
   The suction duct of cleansing unit 100 is formed, for instance, inside cover 470, and separated by cover 470 from ambient space of cover 470 in housing 210. Check valve 710 is disposed in the suction duct of cleansing unit 100. Switch 600 and lever 500 include a structure for opening or closing the suction duct of cleansing unit 100, and this structure is similar to the structure for opening or closing suction duct 70.
   Oral cleansing device 10 discussed above performs almost the same action as oral cleansing device 10 in accordance with the fifth embodiment such that when a setting of switch 600 causes the suction duct of cleansing unit 100 to open, the air is sucked to downstream cleansing duct 62. On the other hand, when a setting of switch 600 causes the suction duct of cleansing unit 100 to close, the air is not substantially sucked into duct 62.
6. A modified example of oral cleansing device 10 equipped with the foregoing suction tube further includes a manually-operated or an electrically-operated air pump for discharging the air into the suction duct of main body 20. The electrically-operated motor works together with motor 30. This oral cleansing device 10 includes an electric switch in cleansing unit 100 or main body 20 for turning on or off the air-pump.
7. Oral cleansing device 10 equipped with the foregoing sucking tube further includes a main-body electric actuator for opening or closing the suction duct of main body 20 and a main-body switch outputting a signal for operating the actuator. This switch is disposed in cleansing unit 100 or main body 20. The actuator opens or closes the suction duct of main body 20 in response to an operation of this switch.
8. A modified example of oral cleansing device 10 in accordance with the fifth embodiment includes a structure for sucking air into downstream cleansing duct 60 of main body 20. This structure replaces the structure that sucks the air from the interior space of grip 200 into duct 62. This oral cleansing device 10 also includes a suction duct (hereinafter referred to as a second suction duct of main body 20) formed in main body 20, and a main-body check valve for opening or closing the second suction duct of main body 20.
   This oral cleansing device 10 further includes a main-body electric actuator for opening or closing the second suction duct of main body 20, and a main-body switch outputting a signal for operating the actuator. The second suction duct of main body 20 communicates between downstream cleansing duct 62 in main body 20 and the interior space or the outside of main body 20. The main-body switch is disposed in cleansing unit 100 or main body 20. The main-body actuator opens or closes the second suction duct of main body 20 in response to the operation of the main-body switch.
   The second suction duct of main body 20 can be in one of the following three patterns: The suction duct in a first pattern communicates between the interior space or the outside of main body 20 and downstream cleansing duct 62 in main body 20. The suction duct in a second pattern communicates between the interior space or the outside of main body 20 and upstream cleansing duct 61 in main body 20. The suction duct in a third pattern communicates between the interior space or the outside of main body 20 and pressurizing chamber 34 of pump 30.
9. A modified example of oral cleansing device 10 in accordance with the fifth embodiment is equipped with an electric suction actuator for revolving lever 500 and a suction switch that outputs a signal for operating the actuator. This electric suction actuator is disposed in cleansing unit 100, and the suction switch is disposed in cleansing unit 100 or main body 20. This actuator revolves lever 500 in response to the operation of the switch, thereby opening or closing suction duct 70.
10. Oral cleansing device 10 equipped with the electric suction actuator discussed above further includes an electric actuator for driving on-off valve 730 for the cleansing duct, and a switch that outputs a signal for operating the actuator. This switch is disposed in cleansing unit 100 or main body 20.
   The electric actuator for the on-off valve moves on-off valve 730 in response to the operation of the switch for the on-off valve, thereby opening or closing downstream cleansing duct 62. Oral cleansing device 10 of this modification example can omit the switch for the on-off valve, and instead, the suction switch can also work as this switch.
11. A modified example of oral cleansing device 10 equipped with the electric suction actuator can include an on-off element replacing the lever 500. This on-off element is driven by the electric suction actuator. One of the examples of this on-off element is an electromagnetic valve. The electric suction actuator drives the on-off element in response to the operation of the suction switch, thereby opening or closing suction duct 70.
12. Each modification example of the embodiments or oral cleansing device 10 equipped with the first switch and the second switch discussed previously is equipped with a button-type switch.
13. Each modification example of the embodiments has a structure in which at least one of main body 20 and cleansing unit 100 is integrated with tube 50 into one body.
14. Each modification example of the embodiments has a structure in which main body 20 and tank 40 are integrated into one body.
15. Pump 30 can be in various styles. For instance, pump 30 is a reciprocating pump of positive displacement type, and more specifically, it is a plunger pump or a diaphragm pump. Another instance is that pump 30 is a kinetic pump of positive displacement type, and more specifically, it is a gear pump, vane pump, or a screw pump.
16. Each of oral cleansing devices 10 in accordance with the embodiments or each of the modification examples thereof is equipped with a main body, tank, and cleansing unit that have functions similar to main body 20, tank 40, and cleansing unit 100. This oral cleansing device 10 has a structure in which these structural elements are integrated into one body as a portable device. For instance Unexamined Japanese Patent Application Publication No. 2005 - 349134 and No. 2011 - 200424 disclose examples of portable type oral cleansing devices.

As discussed above, the present disclosure is useful for various types of oral cleansing devices to be used in families, medical facilities, or environments similar to them.

## Claims

1. An oral cleansing device (10) comprising:
a tank (40) for storing a cleaning fluid;
a cleansing unit (100) including an exhaust port (810) for discharging the cleaning fluid;
a cleansing duct (60) communicating between the tank (40) and the exhaust port (810);
a pump (30) for sucking the cleaning fluid stored in the tank (40) with a negative pressure, and discharging the sucked cleaning fluid to the exhaust port (810); and
a suction duct (70) for supplying air to the cleansing duct (60),
**characterized in that** the suction duct (70) is connected to a downstream cleansing duct (62), which is a part of the cleansing duct (60) and located on a downstream side from the pump (30), wherein the air can be sucked into the cleansing duct (60) through the suction duct (70) with a negative pressure produced by the pump (30) in the downstream cleansing duct (62) and the suction duct (70).

2. The oral cleansing device (10) according to claim 1 further comprising a check valve (710) for the suction duct (70) for closing the suction duct (70) when the cleaning fluid discharged from the pump (30) flows in the downstream cleansing duct (62).

3. The oral cleansing device (10) according to claim 1 further comprising a check valve (720) for the cleansing duct (60), the check valve (720) being disposed in the downstream cleansing duct (62) on a downstream side from a duct connecting section to which the suction duct (70) is connected and closing the downstream cleansing duct (62) when the pump (30) produces a negative pressure.

4. The oral cleansing device (10) according to claim 1, **characterized in that** an exhaust port (32) of the pump (30) includes no check valve.

5. The oral cleansing device (10) according to claim 1, **characterized in that** the suction duct (70) is formed in the cleansing unit (100) and connected to the downstream cleansing duct (62) in the cleansing unit (100).

6. The oral cleansing device (10) according to claim 1 further comprising a switch (600) mounted to the cleansing unit (100) for opening or closing the suction duct (70).

## Patentansprüche

1. Mundreinigungsvorrichtung (10), umfassend:
einen Tank (40) zum Speichern einer Reinigungsflüssigkeit,
eine Reinigungseinheit (100), die eine Auslassöffnung (810) zum Ausführen der Reinigungsflüssigkeit aufweist,
einen Reinigungskanal (60), der den Tank (40) mit der Auslassöffnung (810) verbindet,
eine Pumpe (30) zum Ansaugen der in dem Speicher (40) gespeicherten Reinigungsflüssigkeit mittels eines Unterdrucks und zum Ausführen der angesaugten Reinigungsflüssigkeit zu der Auslassöffnung (810), und
einen Ansaugkanal (70) zum Zuführen von Luft zu dem Reinigungskanal (60),
**dadurch gekennzeichnet, dass** der Ansaugkanal (70) mit einem stromabwärts gelegenen Reinigungskanal (62) verbunden ist, der ein Teil des Reinigungskanals (60) ist und auf einer stromabwärts gelegenen Seite der Pumpe (30) angeordnet ist, wobei die Luft in den Reinigungskanal (60) durch den Ansaugkanal (70) mit einem durch die Pumpe (30) erzeugten Unterdruck in dem stromabwärts gelegenen Reinigungskanal (62) und dem Ansaugkanal (70) angesaugt werden kann.

2. Mundreinigungsvorrichtung (10) nach Anspruch 1, die weiterhin ein Rückschlagventil (710) für den Ansaugkanal (70) zum Schließen des Ansaugkanals (70), wenn die von der Pumpe (30) ausgeführte Reinigungsflüssigkeit in den stromabwärts gelegenen Reinigungskanal (62) fließt, umfasst.

3. Mundreinigungsvorrichtung (10) nach Anspruch 1, die weiterhin ein Rückschlagventil (720) für den Reinigungskanal (60) umfasst, wobei das Rückschlagventil (720) in dem stromabwärts gelegenen Reinigungskanal (62) auf einer stromabwärts gelegenen Seite eines Kanalverbindungsabschnitts, mit dem der Ansaugkanal (70) verbunden ist, angeordnet ist und den stromabwärts gelegenen Ansaugkanal (62) schließt, wenn die Pumpe (30) einen Unterdruck erzeugt.

4. Mundreinigungsvorrichtung (10) nach Anspruch 1, **dadurch gekennzeichnet, dass** eine Auslassöffnung (32) der Pumpe (30) kein Rückschlagventil enthält.

5. Mundreinigungsvorrichtung (10) nach Anspruch 1, **dadurch gekennzeichnet, dass** der Ansaugkanal (70) in der Reinigungseinheit (100) ausgebildet ist und mit dem stromabwärts gelegenen Reinigungskanal (62) in der Reinigungseinheit (100) verbunden ist.

6. Mundreinigungsvorrichtung (10) nach Anspruch 1, die weiterhin einen Schalter (600), der an der Reinigungseinheit (100) für das Öffnen oder Schließen des Ansaugkanals (70) montiert ist, umfasst.

## Revendications

1. Dispositif de nettoyage buccal (10) comprenant :
une cuve (40) de stockage d'un liquide de nettoyage ;
une unité de nettoyage (100) comprenant un orifice d'évacuation (810) pour distribuer le liquide de nettoyage ;
un conduit de nettoyage (60) communiquant entre la cuve (40) et l'orifice d'évacuation (810) ;
une pompe (30) pour aspirer le liquide de nettoyage stocké dans la cuve (40) avec une pression négative, et déchargeant le liquide de nettoyage aspiré vers l'orifice d'évacuation (810) ; et
un conduit d'aspiration (70) pour alimenter de l'air au niveau du conduit de nettoyage (60),
**caractérisé en ce que** le conduit d'aspiration (70) est connecté à un conduit de nettoyage en aval (62), qui est une partie du conduit de nettoyage (60) et localisé sur un côté situé en aval de la pompe (30), où l'air peut être aspiré dans le conduit de nettoyage (60) à travers le conduit d'aspiration (70) avec une pression négative produite par la pompe (30) dans le conduit de nettoyage en aval (62) et le conduit d'aspiration (70).

2. Dispositif de nettoyage buccal (10) selon la revendication 1 comprenant en outre une vanne de contrôle (710) pour le conduit d'aspiration (70) pour fermer le conduit d'aspiration (70) lorsque le liquide de nettoyage évacué de la pompe (30) s'écoule dans le conduit de nettoyage en aval (62).

3. Dispositif de nettoyage buccal (10) selon la revendication 1 comprenant en outre une vanne de contrôle (720) pour le conduit de nettoyage (60), la vanne de contrôle (720) étant disposée dans le conduit de nettoyage en aval (62) sur un côté situé en aval d'une section de connexion du conduit à laquelle le conduit d'aspiration (70) est connecté et fermant le conduit de nettoyage en aval (62) lorsque la pompe (30) produit une pression négative.

4. Dispositif de nettoyage buccal (10) selon la revendication 1, **caractérisé en ce qu'**un orifice d'évacuation (32) de la pompe (30) ne comprend pas de vanne de contrôle.

5. Dispositif de nettoyage buccal (10) selon la revendication 1, **caractérisé en ce que** le conduit d'aspiration (70) est formé dans l'unité de nettoyage (100) et est connecté au conduit de nettoyage en aval (62) dans l'unité de nettoyage (100).

6. Dispositif de nettoyage buccal (10) selon la revendication 1 comprenant en outre un commutateur (600) monté à l'unité de nettoyage (100) pour ouvrir ou fermer le conduit d'aspiration (70).
